# EUROPEAN PATENT APPLICATION

(11) **EP 4 800 585 A1**
(43) Date of publication of application: **02.09.2026**
(21) Application number: 25226510.3
(22) Date of filing: 22.12.2025
(51) Int. Cl.: G06F 21/55

(54) **AGENTIC AUTOMATION FOR SECURITY MONITORING**

(30) Priority: 26.02.2025 US 202519063810
(71) Applicant: UiPath, Inc., New York NY 10017 (US)
(72) Inventor: AMIN, Umesh, New York, 10017 (US); VITON, Michael A., New York, 10017 (US); COTAIE, Andrei, New York, 10017 (US)
(74) Representative: Ungria López, Javier

(57) **Abstract**

Systems and methods for evaluating computer security issues of a computer system are provided. An alert for a computer security issue of a computer system is received. An initial AI (artificial intelligence) agent determines 1) a strategy for evaluating the computer security issue and 2) one or more additional AI agents from a pool of AI agents for evaluating the computer security issue. The computer security issue is evaluated according to the strategy using the one or more additional AI agents. Results of the evaluation of the computer security issue are output.

## Description

### FIELD

The present invention generally relates to automation, and more specifically, to agentic automation for security monitoring.

### BACKGROUND

Computer security refers to the protection of computer systems, such as, e.g., computers, networks, data, and software, from unauthorized access, theft, damage, or disruption. Currently, robotic process automation (RPA) and script-based automations are used for monitoring computer security of computer systems. However, conventional RPA and script-based automation are deterministic, requiring extensive rule-based programming and often requiring human intervention. Conventional RPA and script-based automations thus increase manual efforts, reduce response times, and are impractical and inaccurate, particularly for very large computer systems. Accordingly, an improved and/or alternative approach may be beneficial.

### SUMMARY

Certain embodiments of the present invention may provide alternatives or solutions to the problems and needs in the art that have not yet been fully identified, appreciated, or solved by current computer security technologies and/or provide a useful alternative thereto. For example, some embodiments of the present invention pertain to agentic automation for security monitoring.

In one embodiment, systems and methods for evaluating computer security issues of a computer system are provided. An alert for a computer security issue of a computer system is received. An initial Al (artificial intelligence) agent determines 1) a strategy for evaluating the computer security issue and 2) one or more additional AI agents from a pool of AI agents for evaluating the computer security issue. The computer security issue is evaluated according to the strategy using the one or more additional AI agents. Results of the evaluation of the computer security issue are output.

In one embodiment, the initial Al agent and the one or more additional AI agents have roles defined by role definition files provided as context information via one or more prompts. In one embodiment, each of the role definition files comprises a title, background, tasks, knowledge, skills, and abilities for an Al agent.

In one embodiment, the initial AI agent determines, based on procedures provided as context information via one or more prompts, 1) the strategy and 2) the one or more additional AI agents.

In one embodiment, the alert is classified by at least one of the one or more additional Al agents.

In one embodiment, the computer security issue is mitigated by one or more of the one or more additional AI agents.

In one embodiment, the mitigating of the computer security issue is automatically performed by the one or more of the one or more additional Al agents.

In one embodiment, emerging computer security issues are identified based on news articles.

In one embodiment, the alert is received from a security monitoring/alert system.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIG. 1 is an architectural diagram illustrating a hyper-automation system configured to perform agentic automation and orchestration, according to an embodiment of the present invention.
FIG. 2 illustrates some of the combined capabilities of an artificial intelligence (AI) agent and a robotic process automation (RPA) robot, according to an embodiment of the present invention.
FIG. 3 illustrates pools of AI agents, RPA robots, agentic orchestration processes (AOPs), and applications, according to an embodiment of the present invention.
FIGS. 4A and 4B illustrate an example AI agent service interface, according to an embodiment of the present invention.
FIG. 5 illustrates an example AOP development interface, according to an embodiment of the present invention.
FIG. 6 illustrates an example RPA development interface, according to an embodiment of the present invention.
FIG. 7 illustrates an end-to-end Al agent, RPA robot, and AOP development and deployment system, according to an embodiment of the present invention.
FIG. 8 is an architectural diagram illustrating an agentic automation and RPA system, according to an embodiment of the present invention.
FIG. 9 is an architectural diagram illustrating a deployed RPA system, according to an embodiment of the present invention.
FIG. 10 is an architectural diagram illustrating the relationship between a designer, activities, and drivers, according to an embodiment of the present invention.
FIG. 11 is an architectural diagram illustrating a computing system that may be used to implement embodiments of the present invention.
FIG. 12A illustrates an example of a neural network that has been trained according to an embodiment of the present invention.
FIG. 12B illustrates an example of a neuron, according to an embodiment of the present invention.
FIG. 13 is an architectural diagram illustrating a reference architecture for a generative Al model, according to an embodiment of the present invention.
FIG. 14 is a flowchart illustrating a process for training Al/ML model(s), according to an embodiment of the present invention.
FIG. 15 is a flowchart illustrating a method for evaluating a computer security issue of a computer system, according to an embodiment of the present invention.
FIG. 16 shows a workflow for evaluating security of a computer system, in accordance with one or more embodiments.
FIG. 17 shows a system diagram for receiving an alert of a computer security issue, in accordance with one or more embodiments.
FIG. 18 shows a workflow for classifying an alert, in accordance with one or more embodiments.
FIG. 19 shows a workflow for investigating an alert, in accordance with one or more embodiments.
FIG. 20 shows a workflow for security event management, in accordance with one or more embodiments.
FIG. 21 shows a workflow for detecting emerging computer security issues, in accordance with one or more embodiments.
FIG. 22 shows another workflow for security event management, in accordance with one or more embodiments.
FIG. 23 shows a workflow for forensics acquisition, in accordance with one or more embodiments.
FIG. 24 shows workflow for creating a dedicated forensics environment, in accordance with one or more embodiments.

Unless otherwise indicated, similar reference characters denote corresponding features consistently throughout the attached drawings.

### DETAILED DESCRIPTION OF THE EMBODIMENTS

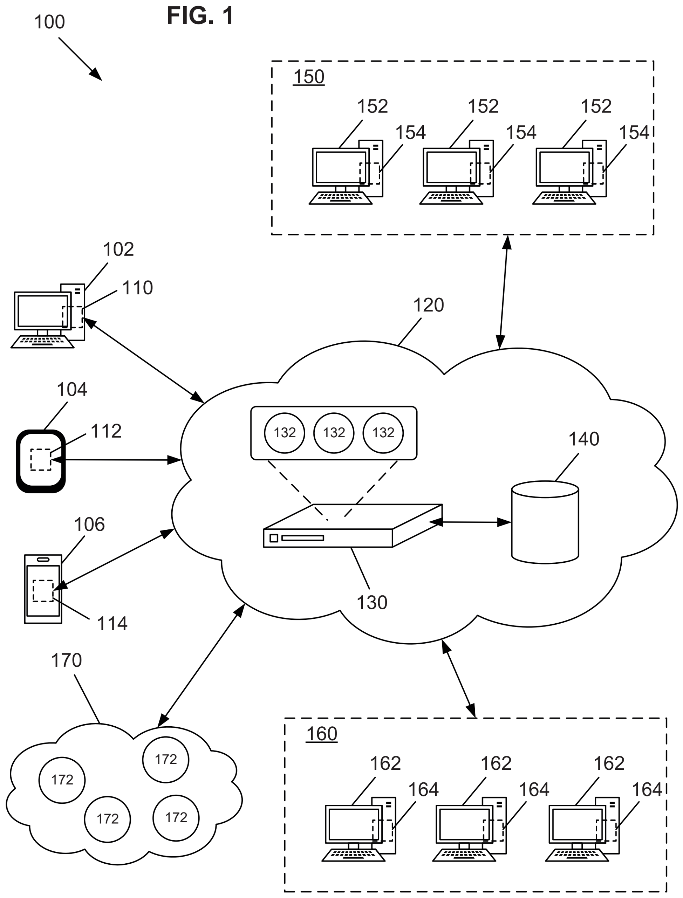

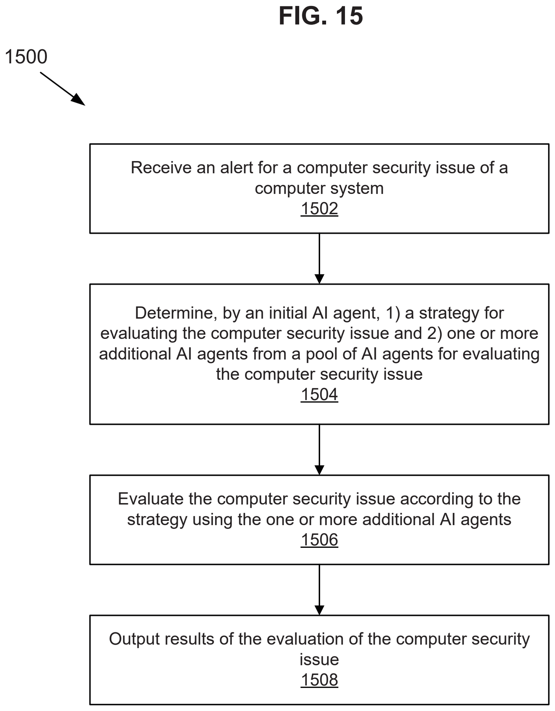

Some embodiments pertain to agentic automation for computer security. Certain embodiments will first be described with respect to FIGS. 1-14 before being described in further detail with respect to FIGS. 15-24.

FIG. 1 is an architectural diagram illustrating a hyper-automation system 100 configured to perform agentic automation and orchestration, according to an embodiment of the present invention. "Hyper-automation," as used herein, refers to automation systems that bring together components of process automation, agentic automation, integration tools, and technologies that amplify the ability to automate work. Some examples of these components include, but are not limited to, artificial intelligence (AI) agents, agentic orchestration processes (AOPs), and robotic process automation (RPA) robots.

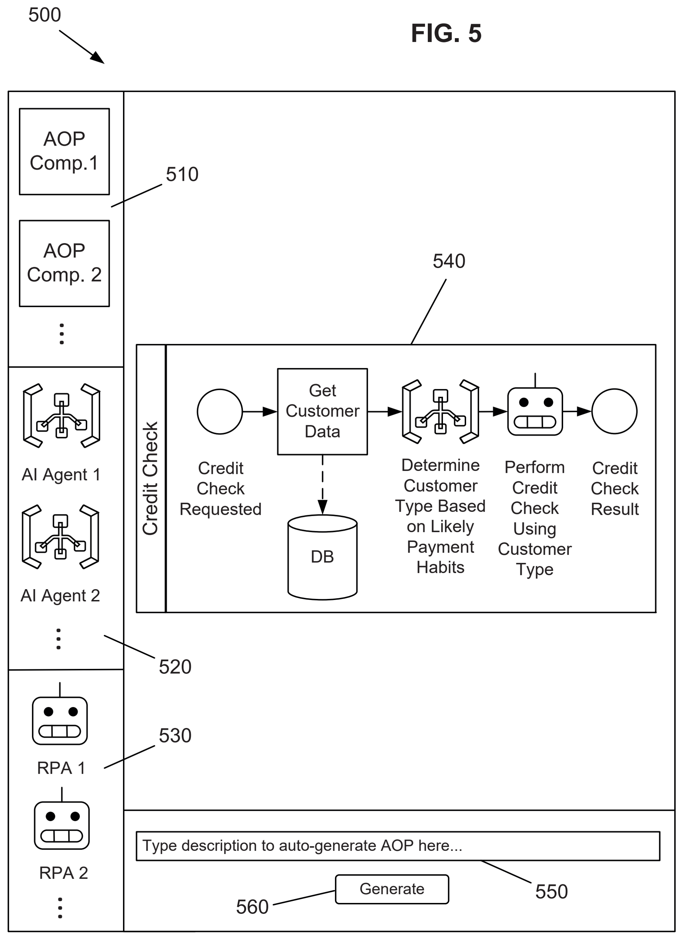

Generally, as used herein, "Al agents" are Al-enhanced, probabilistic automations that act independently, act dynamically, make decisions, execute actions, and act adaptively. This may be due to the use of large language models (LLMs) by the AI agents. AI models are typically probabilistic in nature themselves. "AOPs" are automations that allow users to describe overall business processes. AOPs may be created using an interface that allows the creation of business flowcharts that are described in Business Process Model and Notation (BPMN), which is an Extensible Markup Language (XML) description of the business process. See FIG. 5, for example. "RPA robots" are rules-based, deterministic automations that act predictably and make deterministic decisions.

For instance, RPA may be used at the core of a hyper-automation system in some embodiments, and in certain embodiments, automation capabilities may be expanded with Al / machine learning (ML), process mining, analytics, agentic automation, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

In such embodiments, AI agents "coexist" in tandem with RPA robots that execute RPAs and AOPs. As noted herein, Al agents are automations, enhanced with Al skills, that can act independently and dynamically make decisions, execute actions, and adapt their performance. The AI agents can dynamically leverage the tools available via these RPA robots to perform document processing (see, for example, U.S. Patent Application Publication No. 2021/0097274), user interface (UI) automation (see, for example, U.S. Patent Nos. 10,654,166, 10,990,876, 11,080,548, 11,507,259, 11,733,668, and 11,748,069), semantic copy-and-paste between a source and a target (see, for example, U.S. Patent No. 12,124,806 and U.S. Patent Application Publication Nos. 2023/0107316, 2023/0415338, and 2024/0220581), etc. Al agents can dynamically select these tools and execute them in the form of a pipeline.

Generally speaking, agentic automation is a probabilistic automation performed by one or more AI agents. Agentic automation expands the automation potential of organizations by placing focus not just on individual tasks, but on entire end-to-end processes. Teams of RPA robots, directed by Al agents, may enable a single employee to achieve the work of many. Agentic automation, via AI agents, gives managers the space to mentor, doctors more time to care for patients, developers the ability to fine-tune their work, engineers the freedom to innovate, and customers seamless and personalized experiences.

Various technical effects, benefits, and advantages may be achieved via agentic automation in some embodiments. Agentic automation improves memory usage by requiring less storage for data and increases processor efficiency by reducing the number of calls and actions. Agentic automation also potentially provides the ability to process gigabytes, terabytes, petabytes, or more, of data that would not be possible by human-implemented processes, whether mental or by hand. Agentic automation also potentially enables fewer triggers and models to be used via dynamic decision making. Whereas RPA alone may require 100 actions in an example scenario, using agentic automation, this may be reduced substantially (e.g., to 15 actions). Context grounding may also be employed to tether the AI agent to the desired context for the agentic automation. Accordingly, context grounding "constrains" an LLM to a pertinent context.

Al agents may have agentic memory that evolves and remembers user interactions, feedback, corrections, and solutions (e.g., dynamic user inputs from human-in-the-loop operations). As used herein, "human-in-the-loop" or human-in-the-loop operations can include Al agents and RPA robots working cooperatively with users to receive dynamic direct user inputs. As the agentic memory grows, the Al agent can become increasingly autonomous, reducing the need for dynamic direct human inputs and improving efficiency. Al agents may also learn to be more efficient based on the agentic memory if more efficient solutions are contained therein or derived therefrom. For instance, AI agents may periodically process the agentic memory to analyze patterns to achieve greater autonomy.

As used herein, "agentic memory" is a dynamic caching (i.e., storing) system for managing escalations and tool calls. By way of example operation, when the Al agent encounters a problem while running, the Al agent can prompt or otherwise request from a user interaction(s) or feedback about overcoming the problem, store/cache the interaction(s) or feedback, and learn from this interaction or feedback to reduce the need for repeated human input. According to one or more technical effects, benefits, and advantages, agentic memory provides enhanced efficiency by storing solutions to common problems and minimizing potentially costly tool calls. The cooperative operations of the Al agents and the agentic memory potentially "bend the curve" so human interaction is required less and less as the Al agent continually learns via the agentic memory.

Generally speaking, agentic orchestration is implemented by a conductor application to implement one or more AOPs that make use of Al agents and RPA robots. Agentic orchestration in some embodiments orchestrates Al agents (e.g., UiPath Agents^{™}), third-party agents, RPA robots (e.g., UiPath Robots^{™}), AOPs, and humans executing an agentic workflow (e.g., if human approval is required). Agentic orchestration thus enables the automation, modeling, and monitoring of complex business processes from start to finish. Agentic orchestration also provides the unique ability to orchestrate RPA robots, AI agents, third party agents, and people across end-to-end agentic workflows. Agentic orchestration is beneficial for the successful scaling of agentic automation.

Al agents for agentic automation are Al model-based, per the above, enabling the Al agents to work independently of people and implement these agentic automations. Al agents are also goal-oriented, using context to make probabilistic decisions. Further, AI agents are well-suited for ad hoc tasks that require high adaptability. AI agents learn how work is done and improve over time. Al agents can use and choose various tools for accomplishing tasks, gathering context, and taking actions (often through RPA robots used by the Al agents as tools). In some embodiments, Al agents can build workflows and generate automations for RPA robots and/or other Al agents to execute, such as by leveraging UiPath Autopilot^{™} for developers or another application that helps developers expedite the creation and testing of automations. For instance, Al agents may utilize the designer application via an API to generate another Al agent or an RPA workflow, followed by a human-in-the-loop operation to address any issues with the generated workflow. If correct, the workflow may then be deployed. AI agents may also have varying degrees of autonomy, which is governed by the agentic orchestration.

The Al agent, by executing an "agentic loop," generates a dynamic plan to achieve goals per instructions using the provided tools and context. Once the dynamic plan is generated, the AI agent utilizes an efficient execution path for the dynamic plan. If the dynamic plan has two or more steps that can be executed in parallel, the Al agent executes these steps in parallel based on the available resources. After each step is completed, the Al agent retrieves the output from the step and regenerates the next step or steps. Thus, the agentic loop continues until the goals are achieved. Executing the steps of the dynamic plan in parallel and using the ecosystem tools and context grounding are advanced capabilities for the agentic orchestration.

As noted herein, RPA robots are rules-based, act predictably, and make deterministic decisions. RPA robots are highly reliable, efficient, and well-suited for routine tasks. RPA robots, along with Al agents, may use human-in-the-loop operations for exception management. According to some embodiments, Al agents are more flexible, more abstract, and more self-determining than RPA robots and AOPs. RPA robots are typically more stable, more concrete, and more governable than Al agents and AOPs. AOPs processes typically fall in between the respective flexibility/stability, abstract/concrete, and self-determining/governable qualities of Al agents and RPA robots.

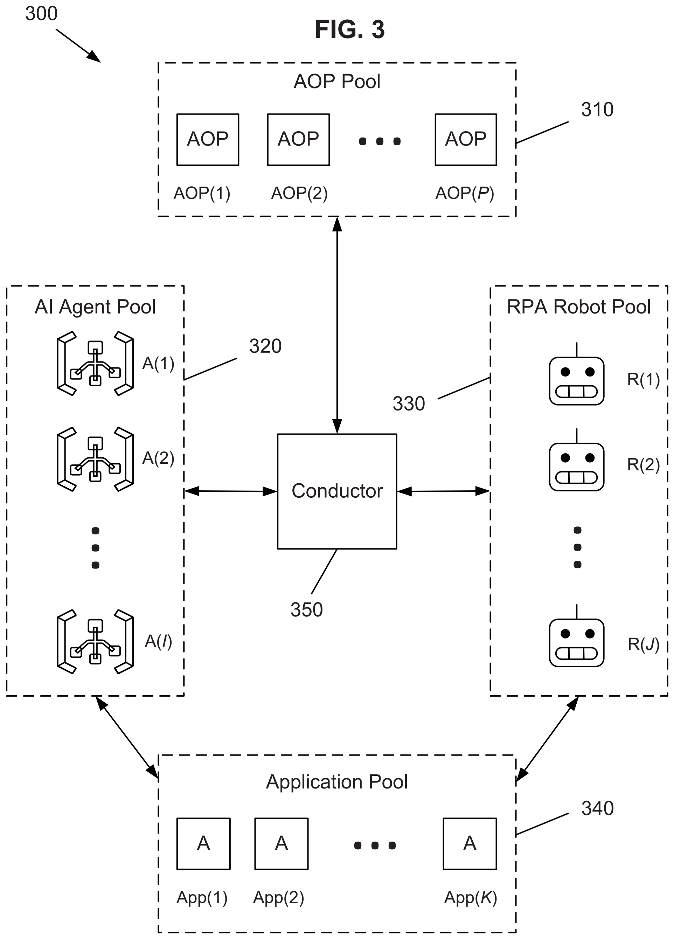

As described further herein with respect to FIG. 3, Al agents and RPA robots can potentially find and use one another as tools to accomplish a task. Al agents and RPA robots may also be able to access and use various applications (e.g., via application programming interfaces (APIs)). Tools may be manually configured for an automation by a developer and/or the AI agents and RPA robots may discover and use tools at runtime.

According to some embodiments, AI agents, AOPs, and RPA robots may work cooperatively with users (e.g., human-in-the-loop), enabling Al agents, AOPs, and RPA robots to make faster, more consistent, and more informed decisions. Furthermore, the use of Al agents, AOPs, and RPA robots enables people to accomplish more, as Al agents, AOPs, and RPA robots may take on additional repetitive, mundane, and ad hoc tasks at a scale that is not possible for human users to operate. People may make the necessary decisions when Al agents, AOPs, or RPA robots encounter an exception. People may thus be elevated to, and focused on, being supervisors, decision makers, and organizational leaders.

Al models provide Al agents with the ability to reason, plan, create, and make autonomous decisions. AI models can also be used by RPA robots for task-specific activities, such as processing a document or analyzing data. Al models may be enhanced with business-specific content and context (e.g., from a collection of context repositories for an enterprise), improving the accuracy and results of the Al models. Al models can be applied individually or concurrently, depending on the complexity of the task. AI model selection can come from the RPA vendor's model library, third-party models, and bring-your-own-model (BYOM) options (see, for example, U.S. Patent Nos. 11,738,453 and 11,748,479).

Hyper-automation system 100 includes user computing systems, such as desktop computer 102, tablet 104, and smart phone 106. However, any desired user computing system may be used without deviating from the scope of the invention including, but not limited to, smart watches, laptop computers, servers, Internet-of-Things (IoT) devices, etc. Also, while three user computing systems are shown in FIG. 1, any suitable number of user computing systems may be used without deviating from the scope of the invention. For instance, in some embodiments, dozens, hundreds, thousands, or millions of user computing systems may be used. The user computing systems may be actively used by a user or run automatically without much or any user input.

As disclosed herein, there are three types of automations in some embodiments: (1) agentic automations that are implemented by respective Al agents; (2) RPAs that are implemented by respective RPA robots; and (3) composite automations that are achieved by a combination of Al agent(s) and RPA robot(s) to accomplish a more complex overall task. Automations 110, 112, 114 may include, but are not limited to, those executed by RPA robots and/or AI agents, whether individually or to achieve a larger composite automation. Other processes may also be implemented, such as listeners. These processes may be standalone applications, subprocesses of another application, part of an operating system, any other suitable software and/or hardware, or any combination of these without deviating from the scope of the invention. Indeed, in some embodiments, the logic of the process(es) is implemented partially or completely via physical hardware.

Each user computing system 102, 104, 106 has respective automations 110, 112, 114 running thereon, such as those implemented by RPA robots, Al agents, etc. In some embodiments, automations 110, 112, 114 can be stored remotely (e.g., on server 130 or in database 140 and accessed via network 120) and loaded by RPA robots and/or AI agents to implement automations 110, 112, 114. Database 140 may store structured and/or unstructured data, although the former is typically required for RPAs. RPA automations may exist as a script (e.g., Extensible Markup Language (XML), Extensible Application Markup Language (XAML), etc.) or be compiled into machine readable code (e.g., as a digital link library). In the case of AI agents, agentic automations may be generated based on plain text descriptions of a desired goal, for example.

Listeners monitor and record data pertaining to user interactions with respective computing systems and/or operations of unattended computing systems and send the data to a core hyper-automation system 120 via a network (e.g., a local area network (LAN), a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from the listeners may be sent periodically as part of a heartbeat message. In some embodiments, the data may be sent to core hyper-automation system 120 once a predetermined amount of data has been collected, after a predetermined time period has elapsed, or both. One or more servers, such as server 130, receive and store data from the listeners in a database, such as database 140.

In the case of automations 110, 112, 114 being RPAs, automations 110, 112, 114 may execute the logic developed in workflows during design time. The workflows may include a set of steps, defined herein as "activities," that are executed in a sequence or some other logical flow. Each activity may include an action, such as clicking a button, reading a file, writing to a log panel, etc. In some embodiments, workflows may be nested or embedded.

Long-running workflows for RPA in some embodiments are master projects that support service orchestration, human-in-the-loop, and long-running transactions in unattended environments. See, for example, U.S. Patent No. 10,860,905, which is hereby incorporated by reference in its entirety. Human-in-the-loop comes into play when certain processes require human inputs (e.g., dynamic direct user inputs) to handle exceptions, approvals, or validation before proceeding to the next step in the activity. In this situation, the process execution is suspended, freeing up the RPA robots until the human-in-the-loop portion of the task is completed.

A long-running workflow may support workflow fragmentation via persistence activities and may be combined with invoke process and non-user interaction activities, orchestrating human-in-the-loop tasks with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing API calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

One or more of automations 110, 112, 114 is in communication with core hyper-automation system 120. In some embodiments, core hyper-automation system 120 may run a conductor application on one or more servers, such as server 130. While one server 130 is shown for illustration purposes, multiple or many servers that are proximate to one another or in a distributed architecture may be employed without deviating from the scope of the invention. For instance, one or more servers may be provided for conductor functionality, AI/ML model serving, authentication, governance, and or any other suitable functionality without deviating from the scope of the invention. In some embodiments, core hyper-automation system 120 may incorporate or be part of a public cloud architecture, a private cloud architecture, a hybrid cloud architecture, etc. In certain embodiments, core hyper-automation system 120 may host multiple software-based servers on one or more computing systems, such as server 130. In some embodiments, one or more servers of core hyper-automation system 120, such as server 130, may be implemented via one or more virtual machines (VMs).

In some embodiments, one or more of automations 110, 112, 114 may call one or more AI/ML models 132 deployed on or accessible by core hyper-automation system 120 and trained to accomplish various tasks. For instance, Al/ML models 132 may include models trained to look for various application versions, perform computer vision (CV), perform optical character recognition (OCR), generate user interface (UI) descriptors, offer suggestions for next activities or sequences of activities in RPA workflows, perform semantic matching, perform natural language processing (NLP), generate or modify code and/or RPA workflows, etc. AI/ML models may be trained using labeled data that includes, but is not limited to, elements from data sources (e.g., web pages, forms, scanned documents, application interfaces, screens, etc.), previously created RPA workflows, screenshots of various application screens for various versions with their corresponding UI elements, libraries of UI objects, etc. AI/ML models 132 may be trained to achieve a desired confidence threshold while not being overfit to a given set of training data. Generally speaking, UI elements, UI descriptors, applications, and application screens can be considered to be UI objects.

Al/ML models 132 may be trained for any suitable purpose without deviating from the scope of the invention, as will be discussed in more detail later herein. Two or more of Al/ML models 132 may be chained in some embodiments (e.g., in series, in parallel, or a combination thereof) such that they collectively provide collaborative output(s). AI/ML models 132 may perform or assist with CV, OCR, document processing and/or understanding, semantic learning and/or analysis, analytical predictions, process discovery, task mining, testing, automatic RPA workflow generation, sequence extraction, clustering detection, audio-to-text translation, NLP, semantic matching, any combination thereof, etc. However, any desired number and/or type(s) of AI/ML models may be used without deviating from the scope of the invention. Using multiple Al/ML models may allow the system to develop a global picture of what is happening on a given computing system, for example. For instance, one AI/ML model could perform OCR, another could detect buttons, another could compare sequences, etc. Patterns may be determined individually by an Al/ML model or collectively by multiple AI/ML models. In certain embodiments, one or more AI/ML models are deployed locally on at least one of computing systems 102, 104, 106.

In some embodiments, multiple AI/ML models 132 may be used. Each AI/ML model 132 is an algorithm (or model) that runs on the data, and the Al/ML model itself may be a deep learning neural network (DLNN) of trained artificial "neurons" that are trained on training data, for example. In some embodiments, AI/ML models 132 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 100 may provide four main groups of functionality in some embodiments: (1) discovery; (2) building automations; (3) management; and (4) engagement. Automations (e.g., run on a user computing system, a server, etc.) may be run by RPA robots, AOPs, or AI agents, for example, in some embodiments, and may provide any of the functionality described herein. By way of example, RPA robots can include attended robots, unattended robots, and/or test robots. Attended robots work with users to assist with tasks (e.g., via UiPath Assistant^{™}). Unattended robots work independently of users and may run in the background, potentially without user knowledge. Test robots run test cases against applications or RPA workflows. Test robots may be run on multiple computing systems in parallel in some embodiments.

The discovery functionality may discover and provide automatic recommendations for different opportunities for automation of business processes. Such functionality may be implemented by one or more servers, such as server 130. The discovery functionality may include providing an automation hub, process mining, task mining, and/or task capture in some embodiments. The automation hub (e.g., UiPath Automation Hub^{™}) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud^{™} and/or UiPath Al Center^{™}) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from user computing systems 102, 104, 106 by listeners, for example, and processed by servers, such as server 130. One or more AI/ML models 132 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud^{™} and/or UiPath Al Center^{™}) identifies and aggregates workflows (e.g., employee workflows), and then applies AI to expose patterns and variations in day-to-day tasks, scoring such tasks for ease of automation and potential savings (e.g., time and/or cost savings). One or more Al/ML models 132 may be employed to uncover recurring task patterns in the data. Repetitive tasks that are ripe for automation may then be identified. This information may initially be provided by listeners and analyzed on servers of core hyper-automation system 120, such as server 130, in some embodiments. The findings from task mining (e.g., XAML process data) may be exported to process documents or to a designer application such as UiPath Studio^{™} to create and deploy automations more rapidly. Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud^{™} and/or UiPath Al Center^{™}) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word^{®} documents, XAML files, and the like. Build-ready workflows may be exported directly to a designer application in some embodiments, such as UiPath Studio^{™}. Task capture may simplify the requirements gathering process for both subject matter experts explaining a process and Center of Excellence (CoE) members providing production-grade automations.

Building automations may be accomplished via a designer application (e.g., UiPath Studio^{™}, UiPath StudioX^{™}, or UiPath Studio Web^{™}). For instance, developers of an RPA development facility 150 may use designer applications 154 of computing systems 152 to build and test agentic automations, RPAs, AOPs, and/or composite automations for various applications and environments, such as web, mobile, SAP^{®}, and virtualized desktops. Developers may also build AOPs. For instance, developers may create automations to be executed by RPA robots, AI agents, AOPs, a combination thereof, etc. API integration may be provided for various applications, technologies, and platforms. Predefined activities, drag-and-drop modeling, and a workflow recorder, may make automation easier with minimal coding. Document understanding functionality may be provided via drag-and-drop Al skills for data extraction and interpretation that call one or more AI/ML models 132. Such automations may process virtually any document type and format, including tables, checkboxes, signatures, and handwriting. When data is validated or exceptions are handled, this information may be used to retrain the respective Al/ML models, improving their accuracy over time.

Designer application 154 may be designed to call one or more of trained Al/ML models 132 on server 130 and/or generative Al models 172 in a cloud environment via network 120 (e.g., a local area network (LAN), a mobile communications network, a satellite communications network, the Internet, any combination thereof, etc.) to assist with the automation development process. In some embodiments, one or more of the Al/ML models may be packaged with designer application 154 or otherwise stored locally on computing system 152.

In some embodiments, designer application 154 and one or more of Al/ML models 132 may be configured to use an object repository stored in database 140. See, for example, U.S. Patent No. 11,748,069, which is hereby incorporated by reference in its entirety. Generally speaking, the object repository is a storage mechanism used by automations for images, text, semantic data, taxonomical associations, ontological associations, UI objects, etc. For example, the object repository may include libraries of UI objects that can be used to develop RPA workflows via designer application 154. The object repository may be used to add UI descriptors to activities in the workflows of designer application 154 for UI automations. In some embodiments, one or more of AI/ML models 132 may generate new UI descriptors and add them to the object repository in database 140.

Once automations are completed in designer application 154, they may be published on server 130, pushed out to computing systems 102, 104, 106, etc. For example, as new UI descriptors are created and/or existing UI descriptors are modified, a global repository of UI object libraries may be built that is sharable and collaborative for all automations. Regarding object repositories, taxonomies and ontologies may be used. A taxonomy is a hierarchical structure of subcategories. An ontology is a formal representation of a domain of knowledge, including concepts, properties, and relationships therebetween. In an ontology, the relationships between categories are not necessarily hierarchical, and the ontological relationship may span multiple screens of an application.

An integration service may allow developers to seamlessly combine UI automation with API automation, for example. Automations, such as any of the types described herein, may be built that require APIs or traverse both API and non-API applications and systems. A repository (e.g., UiPath Object Repository^{™}) or marketplace (e.g., UiPath Marketplace^{™}) for pre-built automation templates and solutions may be provided to allow developers to automate a wide variety of processes more quickly. Thus, when building automations, hyper-automation system 100 may provide user interfaces, development environments, API integration, pre-built and/or custom-built AI/ML models, development templates, integrated development environments (IDEs), and advanced Al capabilities. Hyper-automation system 100 enables development, deployment, management, configuration, monitoring, debugging, and maintenance of RPA robots and Al agents in some embodiments, which may provide automations for hyper-automation system 100.

In some embodiments, components of hyper-automation system 100, such as designer application(s) and/or an external rules engine, provide support for managing and enforcing governance policies for controlling various functionality provided by hyper-automation system 100. Governance is the ability for organizations to put policies in place to prevent users from developing automations (e.g., RPA robots and/or Al agents) capable of taking actions that may harm the organization, such as violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See, for example, U.S. Patent No. 11,733,668, which is hereby incorporated by reference in its entirety.

The management functionality may provide management, deployment, and optimization of automations across an organization. The management functionality may include orchestration, test management, Al functionality, and/or insights in some embodiments. Management functionality of hyper-automation system 100 may also act as an integration point with third-party solutions and applications for automation applications and/or RPA robots. The management capabilities of hyper-automation system 100 may include, but are not limited to, facilitating provisioning, deployment, configuration, queuing, monitoring, logging, and interconnectivity of RPA robots and/or Al agents, among other things.

A conductor application, such as UiPath Orchestrator^{™} (which may be provided as part of the UiPath Automation Cloud^{™} in some embodiments, or on premises, in VMs, in a private or public cloud, in a Linux^{™} VM, or as a cloud native single container suite via UiPath Automation Suite^{™}), provides orchestration capabilities to deploy, monitor, optimize, scale, and ensure security of RPA robot and/or Al agent deployments. A test suite (e.g., UiPath Test Suite^{™}) may provide test management to monitor the quality of deployed automations. The test suite may facilitate test planning and execution, meeting of requirements, and defect traceability. The test suite may include comprehensive test reporting.

Analytics software (e.g., UiPath Insights^{™}) may track, measure, and manage the performance of deployed automations. The analytics software may align automation operations with specific key performance indicators (KPIs) and strategic outcomes for an organization. The analytics software may present results in a dashboard format for better understanding by human users.

A data service (e.g., UiPath Data Service^{™}) may be stored in database 140, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an Al center (e.g., UiPath Al Center^{™}), which facilitates incorporation of Al/ML models into automations. Pre-built Al/ML models, model templates, and various deployment options may make such functionality accessible even to those who are not data scientists. Deployed automations (e.g., RPA robots) may call Al/ML models from the Al center, such as Al/ML models 132. Performance of the Al/ML models may be monitored and be trained and improved using human-validated data, such as that provided by data review center 160. Human reviewers may provide labeled data to core hyper-automation system 120 via a review application 164 on computing systems 162. For instance, human reviewers may validate that predictions by Al/ML models 132 and/or generative Al models 172 are accurate or provide corrections otherwise. Human reviewers may also provide dynamic direct user input (e.g., within the scope of human-in-the-loop operations) to Al agents, and the responses and corrections provided by the human reviewers may be used to train LLM(s) used by Al agents to be more accurate. In other words, this dynamic input may be saved as training data for retraining Al/ML models 132 and/or generative AI models 172 and may be stored in a database such as database 140, for example. The AI center may then schedule and execute training jobs to train the new versions of the AI/ML models using the training data. Both positive and negative examples may be stored and used for retraining of AI/ML models 132 and/or generative Al models 172.

The engagement functionality engages humans and automations as one team for seamless collaboration on desired processes. Low-code applications may be built (e.g., via UiPath Apps^{™}) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center^{™})provides a straightforward and efficient mechanism to hand off processes from automations to humans, and vice versa. Humans may provide approvals or escalations, make exceptions, etc. The automation may then perform the automatic functionality of a given workflow.

A local assistant may be provided as a launchpad for users to launch automations (e.g., UiPath Autopilot^{™}). Such an assistant may also provide semantic cut-and-paste functionality (e.g., UiPath Clipboard AI^{™}). See, for example, U.S. Patent No. 12,124,806 and U.S. Patent Application Publication Nos. 2023/0107316, 2023/0415338, and 2024/0220581. This functionality may be provided in a tray provided by an operating system, for example, and may allow users to interact with RPA robots and RPA robot-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

End-to-end measurement and government of an automation program at any scale may be provided by hyper-automation system 100 in some embodiments. Per the above, analytics may be employed to understand the performance of automations (e.g., via UiPath Insights^{™}). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops^{™}) may be provided to manage automations throughout the automation lifecycle. An organization may govern how automations are built, what users can do with them, and which automations users can access.

Hyper-automation system 100 provides an iterative platform in some embodiments. Processes can be discovered, automations can be built, tested, and deployed, performance may be measured, use of the automations may readily be provided to users, feedback may be obtained, AI/ML models may be trained and retrained, and the process may repeat itself. This facilitates a more robust and effective suite of automations.

In some embodiments, per the above, generative Al models are used. For instance, Al agents make use of generative Al models. Generative Al models can generate various types of content, such as text, imagery, audio, and synthetic data. Various types of generative Al models may be used, including, but not limited to, LLMs, generative adversarial networks (GANs), diffusion models, flow-based models, variational autoencoders (VAEs), transformers, etc. In the case of LLMs, for example, NLP models such as word2vec, BERT, GPT-3, ChatGPT, etc. may be used in some embodiments to facilitate semantic understanding and provide more accurate and human-like answers. These models may be part of AI/ML models 132 hosted on server 130. For instance, the generative Al models may be trained on a large corpus of textual information to perform semantic understanding, to understand the nature of what is present on a screen from text, to automatically generate code, and the like. AI agents may use such generative Al models. In certain embodiments, generative Al models 172 provided by an existing cloud ML service provider, such as OpenAI^{®}, Google^{®}, Amazon^{®}, Microsoft^{®}, IBM^{®}, Nvidia^{®}, Meta^{®}, etc., may be employed and trained to provide such functionality. In generative Al embodiments where generative Al model(s) 172 are remotely hosted, server 130 can be configured to integrate with third-party APIs, which allow server 130 to send a request to generative Al model(s) 172 including the requisite input information and receive a response in return (e.g., the semantic matches of fields between application versions, a classification of the type of the application on the screen, responses to natural language queries from users, etc.). Such embodiments may provide a more advanced and sophisticated user experience, as well as provide access to state-of-the-art NLP and other ML capabilities that these companies offer.

One aspect of generative Al models in some embodiments is the use of transfer learning. In transfer learning, a pretrained generative Al mode, such as an LLM, is fine-tuned on a specific task or domain. This allows the LLM to leverage the knowledge already learned during its initial training and adapt it to a specific application. In the case of LLMs, the pretraining phase involves training an LLM on a large corpus of text, typically consisting of billions of words. During this phase, the LLM learns the relationships between words and phrases, which enables the LLM to generate coherent and human-like responses to text-based inputs. The output of this pretraining phase is an LLM that has a high level of understanding of the underlying patterns in natural language.

In the fine-tuning phase, the pretrained LLM is adapted to a specific task or domain by training the LLM on a smaller dataset that is specific to the task. For instance, in some embodiments, the LLM may be trained to analyze a certain type or multiple types of data sources to improve its accuracy with respect to their content. This data may include, but is not limited to, prompt tuning or instruction tuning, where the model is specifically trained to better understand and follow certain types of instructions or prompts, improving its ability to perform specific tasks when given appropriate instructions. Such information may be provided as part of the training data, and the LLM may learn to focus on these areas and more accurately identify data elements therein. Fine-tuning allows the LLM to learn the nuances of the task or domain, such as the specific vocabulary and syntax used in that domain, without requiring as much data as would be necessary to train an LLM from scratch. By leveraging the knowledge learned in the pretraining phase, the fine-tuned LLM can achieve state-of-the-art performance on specific tasks with a relatively small amount of training data.

LLMs may use a vector database. Vector databases index, store, and provide access to structured or unstructured data (e.g., text, images, time series data, etc.) alongside the vector embeddings thereof. Data such as text may be tokenized, where single letters, words, or sequences of words are parsed from the text into tokens. These tokens are then "embedded" into vector embeddings, which are the numerical representations of this data. Vector databases enable LLMs to find and retrieve similar objects quickly and at scale in production environments, which is not possible via manual processes.

Al and ML allow unstructured data to be numerically represented without losing the semantic meaning thereof in vector embeddings. A vector embedding is a long list of numbers, each describing a feature of the data object that the vector embedding represents. Similar objects are grouped together in the vector space. In other words, the more similar the objects are, the closer that the vector embeddings representing the objects will be to one another. Similar objects may be found using a vector search, similarity search, or semantic search. The distance between the vector embeddings may be calculated using various techniques including, but not limited to, squared Euclidean or L2-squared distance, Manhattan or L1 distance, cosine similarity, dot product, Hamming distance, etc. It may be beneficial to select the same metric that is used to train the Al/ML model.

Vector indexing may be used to organize vector embeddings so data can be retrieved efficiently. Calculating the distance between a vector embedding and all other vector embeddings in the vector database using the k-Nearest Neighbors (kNN) algorithm can be computationally expensive if there are a large number of data points since the required calculations increase linearly (O(n)) with the dimensionality and the number of data points. It is more efficient to find similar objects using an approximate nearest neighbor (ANN) approach. The distances between the vector embeddings are pre-calculated, and similar vectors are organized and stored close to one another (e.g., in clusters or a graph) similar objects can be found faster. This process is called "vector indexing." ANN algorithms that may be used in some embodiments include, but are not limited to, clustering-based indexing, proximity graph-based indexing, tree-based indexing, hash-based indexing, compression-based indexing, etc.

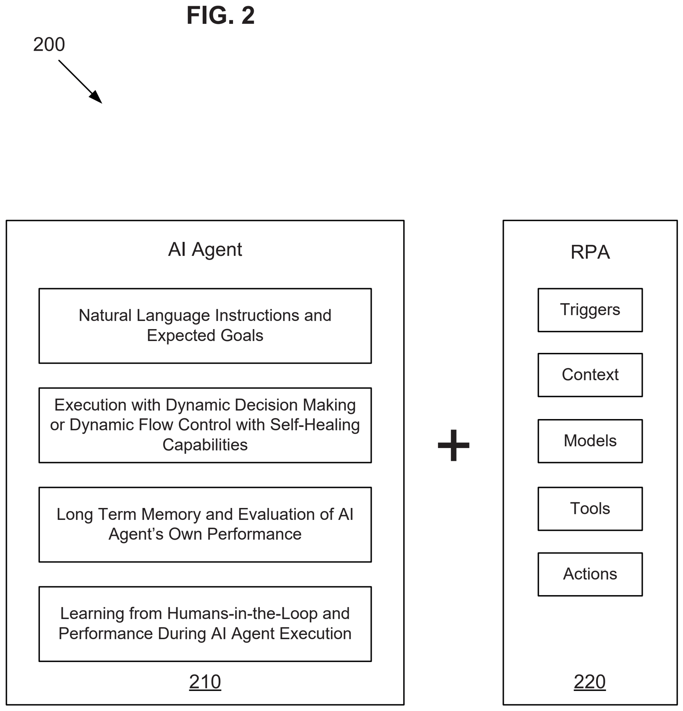

FIG. 2 illustrates some of the combined capabilities 200 of an Al agent 210 and an RPA robot 220, according to an embodiment of the present invention. Al agent 210 is configured to process natural language instructions and achieve expected goals therefrom, execute with dynamic decision making or dynamic flow control with self-healing capabilities, store information in long term memory and evaluate its own execution performance, and learn from humans-in-the-loop and its own performance during execution. RPA robot 220 can be leveraged by Al agent 210 to respond to triggers (e.g., from a conductor application such as UiPath Orchestrator^{™}), to respond based on context (i.e., RPA robot 220 can retrieve information from the context to execute deterministic steps, such as updating a document based on the retrieved information from the context; alternatively, agent 210 can use the retrieved context to update a dynamic plan and execute the next steps complete the goals as per the instructions), to leverage AI models (e.g., CV models, document processing models, speech-to-text models, OCR models, etc.), leverage RPA tools (e.g., utilize tools available in the RPA ecosystem, such as complete automations, workflows within automations, integration service connector calls for 3^{rd} party and 1^{st} party services, RPA designer application activities, LLM calls, etc.), and perform actions that an RPA robot can take (i.e., use the RPA robot as a tool) based on input from the Al agent. Al agent 210 can also take actions to update its memory, update the plan to accomplish its goals per instructions, self-evaluate and learn from the actions, self-heal when it encounters roadblocks, and escalate to humans when it needs help.

As discussed above, various technical effects, benefits, and advantages may be achieved via agentic automation in some embodiments. Agentic automation improves memory usage by requiring less storage for data and increases processor efficiency by reducing the number of calls and actions. Agentic automation also potentially provides the ability to process gigabytes, terabytes, petabytes, or more, of data that would not be possible by human-implemented processes, whether mental or by hand. It also potentially enables fewer triggers and models to be used via dynamic decision making. Whereas RPA alone may require 100 actions in an example scenario, using agentic automation, this may be reduced substantially (e.g., to 15 actions). Context grounding may also be employed to tether the AI agent to the desired context for the agentic automation. This "constrains" the LLM to a pertinent context.

As used herein, "context grounding" refers to a methodology to improve models, such as LLMs, by integrating enterprise-specific information with pretrained knowledge, enabling accurate responses to specialized or recent queries. In some embodiments, context grounding uses external data to augment the LLM response and get a response that the LLM does not know about innately and answer queries on top of the context provided. By way of example, because unique industry terminology and complex document structures can pose challenges in ensuring effective retrieval and semantic matching, context grounding solves challenges by providing precise chunking of documents to ensure relevant information (e.g., from the unique industry terminology and complex document structures) can be passed to an LLM without noise. By way of an additional example, context grounding provides enhanced extraction and search techniques tailored to diverse industries and applications (e.g., tailored to the unique industry terminology and complex document structures) that improves the LLM response.

FIG. 3 illustrates pools 300 of AOPs, Al agents, RPA robots, and applications, according to an embodiment of the present invention. AOP pool 310 includes AOPs 1, 2, ... , *P* that implement business processes. Per the above, the AOPs may be implemented as BPMN, which is executed by an AOP execution engine, such as Temporal^{®}. AOPs can utilize AI agents and/or RPA robots to execute parts of the business process.

Al agent pool 320 includes Al agents 1, 2, ..., *I* that have been trained to perform various tasks, such as investigating claims, seeking resolution with human employees, summarizing policies and technical specifications, etc. RPA robot pool 330 includes RPA robots 1, 2, ... ,*J* that execute various automations, such as UI automations, semantic matching automations, form filling automations, etc. Application pool 340 includes applications 1, 2, *..., K* that the AI agents and/or RPA robots can interact with. For instance, the applications may include CRM applications, invoicing applications, payroll applications, banking applications, web applications, legacy system applications, word processing applications, spreadsheet applications, email applications, etc. The Al agents, RPA robots, and applications may be on a single computing system or on multiple or many computing systems. AOPs are typically in the cloud or otherwise server side, and may be on the same computing system(s) as conductor application 350 in some embodiments.

The AOPs can trigger or call the Al agents and RPA robots via conductor application 350. The Al agents and RPA robots can also trigger or call one another via conductor application. For instance, to call an RPA robot, the Al agent may make a "Start Job" call in conductor application 350. It should be noted that the RPA robots are deployed as automations that are controlled by conductor application 350. The Al agents and RPA robots can also trigger or call certain applications. For instance, via information gleaned from human-in-the-loop actions, the Al agents may dynamically learn which RPA robots, other Al agents, and/or applications to trigger or call to achieve a task. For instance, an Al agent may learn to trigger an RPA robot via conductor application 350 to fill out and submit a web form. The Al agent may also learn to open Microsoft Excel^{®} and enter the form information into appropriate tabs, open and update a payroll application, etc. The Al agent may further learn to call or trigger an email resolution Al agent via conductor application 350 that reaches out to a human customer service representative of a bank if an issue occurs. The technical effects, benefits, and advantages may be similar to those discussed above with respect to FIGS. 1 and 2 in some embodiments.

In order for Al agents and RPA robots to find one another, the Al agents may belong to a tenant. The designer application may call the conductor to get the list of available RPAs. There are three ways for getting the capabilities of automations in some embodiments: (1) the user provides a description of what the automation does while creating the workflow in the designer application; (2) AI agents and ML techniques are used to generate a summary of what a given workflow does; or (3) the developer can describe what the automation does in the designer application. The conductor application may also have lists of what applications are available to given Al agents and RPA robots. In other words, descriptions of available AI agents, RPA robots, and/or applications are derived from or assigned by Al agents, ML techniques, or users.

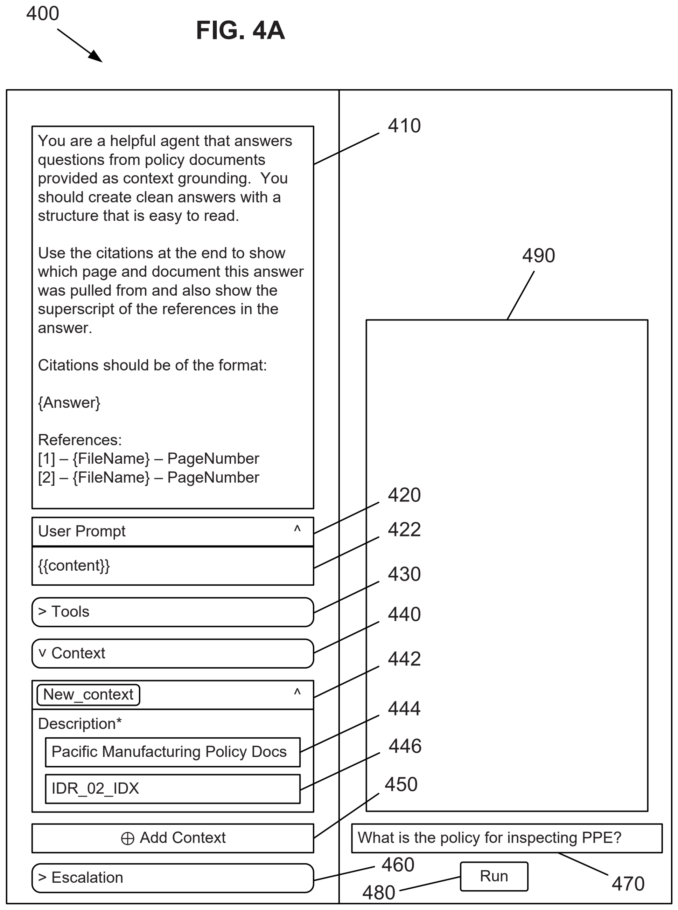

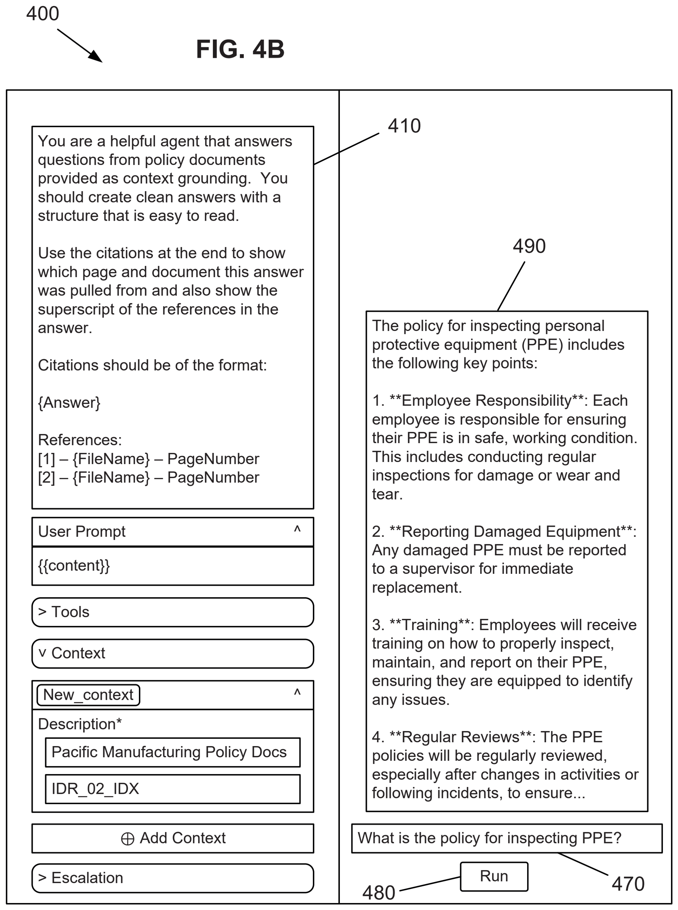

FIG. 4A and 4B illustrate an example agent service interface 400, according to an embodiment of the present invention. Referring to FIG. 4A, the agent answers questions regarding policy documents that are provided within context grounding. An agent instructions pane 410 includes a natural language description entered by a user of what the Al agent is intended to do. A user prompt 420 allows the developer to enter content for a user prompt in a content field 422, if desired. Tools dropdown 430 allows the developer to select tools that the AI agent will utilize, such as using APIs for applications, calling RPA robots to execute RPAs, etc.

A context dropdown 440 allows the developer to configure the context grounding for the Al agent. A context configuration pane 442 allows the developer to provide a description via description field 444 and an Elastic Common Schema (ECS) index via ECS index field 446 for specific policy documents that have information regarding contracts, stipulation and what to do, etc. in this example. The developer can also add additional context 450 to further supplement the context grounding. Human escalation options can be configured via dropdown 460.

A query field 470 allows the user to provide a query that the Al agent will respond to. The AI agent runs the query when the user clicks run button 480. Turning to FIG. 4B, the results during AI agent execution are then shown in execution pane 490 as the AI agent retrieves and outputs them.

FIG. 5 illustrates an example AOP development interface 500, according to an embodiment of the present invention. AOP development interface 500 includes AOP components 510, AI agents 520, and RPAs 530 that the user can select when developing a business process. These can be selected and dragged to a canvas 540 where the user can manually develop the AOP. In this example, a credit check is implemented by getting customer data from a database, calling an Al agent to determine a customer type (e.g., highly likely to pay, likely to miss payments, frequently between jobs, etc.) by analyzing the customer data. The type is then provided to an RPA robot that takes this information into account when performing a credit check. Alternatively, the AOP developer can type a description of the business process into field 550 and click a generate button 560. This text is provided to an LLM, which attempts to understand the requested business process and automatically create the AOP workflow. The AOP developer can then edit the AOP workflow as desired.

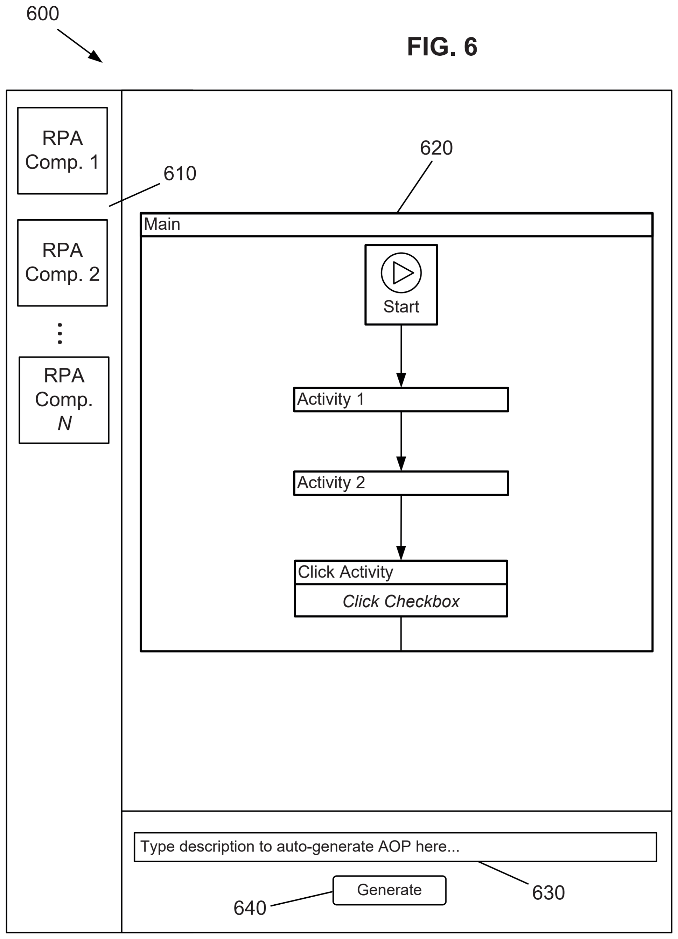

FIG. 6 illustrates an example RPA development interface 600, according to an embodiment of the present invention. RPA development interface 600 includes RPA components 610 that the user can select when developing an RPA workflow. These can be selected and dragged to a canvas 620. Alternatively, the RPA developer can type a description of the RPA into field 630 and click a generate button 640. This text is provided to an LLM, which attempts to understand the requested business process and automatically create the RPA workflow. The developer can then edit the RPA workflow as desired. It should be noted that the functionality shown and described with respect to FIGS. 4A, 4B, 5 and 6 may be provided in a single designer application in some embodiments.

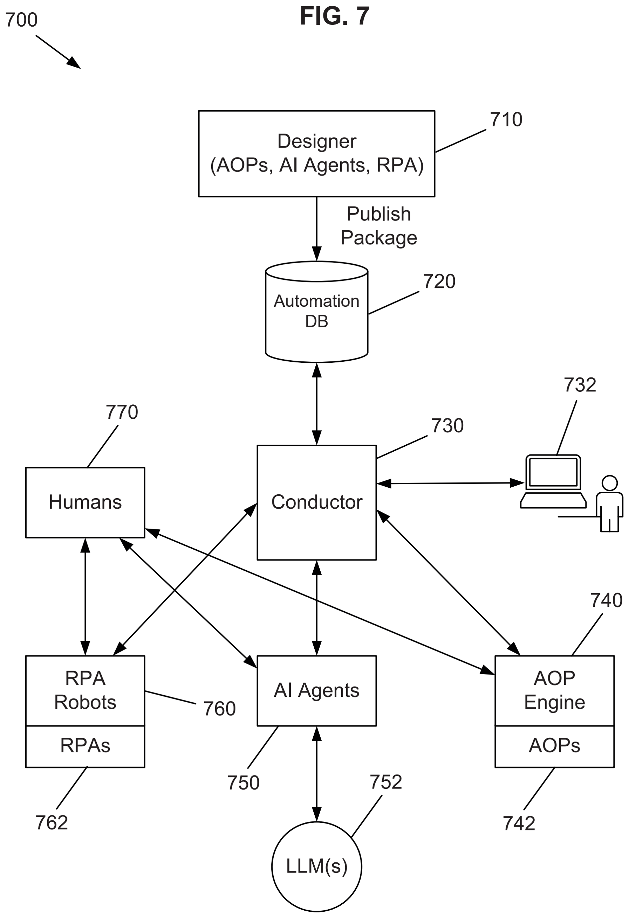

FIG. 7 illustrates an end-to-end Al agent, RPA robot, and AOP development and deployment system 700, according to an embodiment of the present invention. A designer application 710 allows developers to design AOPs, AI agents, and RPA workflows. Once these have been tested and validated, they are packaged and published to an automation database 720.

A conductor application 730 manages deployments of these automations, as well as of AOPs, Al agents, and RPA robots. When a human user or software process 732 requests that an AOP be run, conductor application 730 sends a start job command to AOP engine 740, which selects and starts the appropriate automation from AOPs 742. When executing AOP 742, steps may be encountered that are implemented by Al agents 750 or RPA robots 760. When this occurs, AOP engine 740 suspends the AOP workflow execution and sends a request to conductor application 730 to send a start job request to an appropriate Al agent 750 or RPA robot 760 to execute the step.

In the case of an Al agent being requested, conductor application 730 sends the start job request to the appropriate Al agent 750. This request may include natural language text or other information provided by AOP engine 740 to conductor application 730. AI agent 750 then performs the step by executing an LLM 752 to assist in carrying out the task. Al agent 750 then sends information pertinent to the task (e.g., requested information, an indication that the step was completed, an indication that the step failed, etc.) to conductor 730, which provides this information to AOP engine 740. AOP engine 740 then resumes its operation.

In the case of an RPA robot being requested, conductor application 730 sends the start job request to the appropriate RPA robot 760. RPA robot 760 then executes A requested RPA 762. RPA robot 760 then sends information pertinent to the task (e.g., requested information, an indication that the step was completed, an indication that the step failed, etc.) to conductor 730, which provides this information to AOP engine 740. AOP engine 740 then resumes its operation.

In some cases, human action may be required by an AOP 742, an Al agent 750, or an RPA 762. In this case, AOP engine 740, Al agent 750, or RPA robot 760 contacts a human 770 for the human-in-the-loop portion of the automation. After the human completes the task, the AOP engine 740, AI agent 750, or RPA robot 760 resumes the automated portion of the automation.

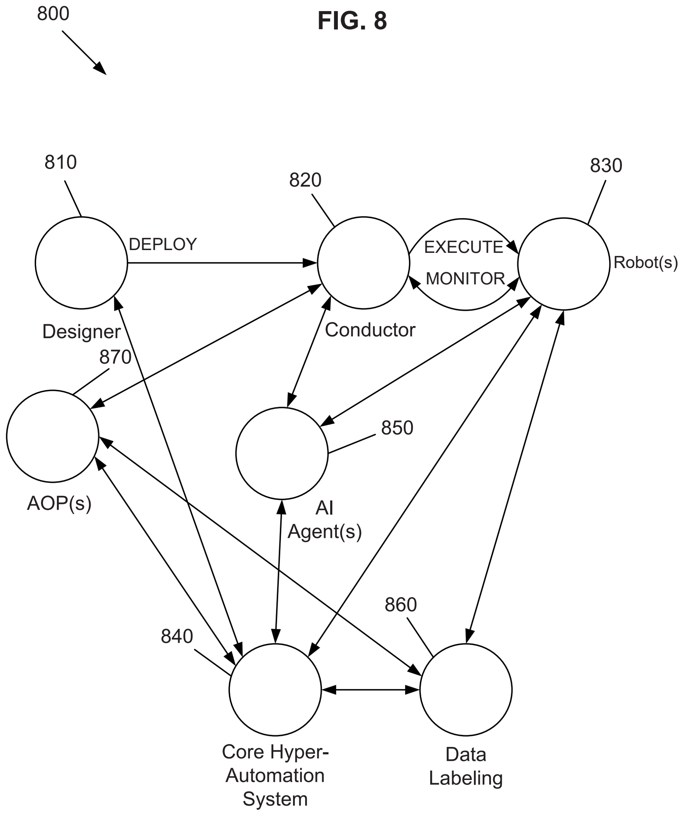

FIG. 8 is an architectural diagram illustrating an agentic automation and RPA system 800, according to an embodiment of the present invention. In some embodiments, agentic automation and RPA system 800 is part of hyper-automation system 100 of FIG. 1. Agentic automation and RPA system 800 includes a designer 810 that allows a developer to design automations for Al agents and RPA robots (e.g., workflows, natural language instructions for AI agents, context grounding, tool configurations, etc.). Designer 810 may provide a solution for application integration, as well as automating third-party applications, administrative Information Technology (IT) tasks, and business IT processes. Designer 810 may facilitate development of an automation project, which is a graphical representation of a business process. Simply put, designer 810 facilitates the development and deployment of automations for RPA robots and AI agents. In some embodiments, designer 810 may be an application that runs on a user's desktop, an application that runs remotely in a VM, a web application, etc.

The automation project enables automation of rule-based processes by giving the developer control of the execution order and the relationship between a custom set of steps developed in a workflow, i.e., "activities," per the above. One commercial example of an embodiment of designer 810 is UiPath Studio^{™}. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable for more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow and/or other configuration for an Al agent is developed in designer 810, execution of business processes is orchestrated by conductor 820, which orchestrates one or more robots 830, one or more Al agents 850, and/or one or more AOPs 870 that execute the workflows developed in designer 810. One commercial example of an embodiment of conductor 820 is UiPath Orchestrator^{™}. Conductor 820 facilitates management of the creation, monitoring, and deployment of resources in an environment. Conductor 820 may act as an integration point with third-party solutions and applications. Per the above, in some embodiments, conductor 820 may be part of core hyper-automation system 120 of FIG. 1.

It should be noted that RPA robots 830 may operate independently for deterministic processes. Al agents 850 and AOPs 870 can also operate independently (e.g., for non-deterministic processes), or utilize RPA robot(s) 830 or other Al agents 850 as tools to accomplish part of their agentic automations. AI agents 850 can drive composite automations that utilize both RPA robots 830 and AI agents 850, or vice versa, and AOPs 870 may include such composite automations.

Conductor 820 may manage a fleet of robots 830 and Al agents 850, connecting and executing RPA robots8530 and Al agents 850 from a centralized point (e.g., as requested by an AOP engine that is implementing an AOP). Types of RPA robots 830 that may be managed include, but are not limited to, attended robots, unattended robots, development robots (similar to unattended robots, but used for development and testing purposes), and nonproduction robots (similar to attended robots, but used for development and testing purposes). Attended robots are triggered by user events and operate alongside a human on the same computing system. Attended robots may be used with conductor 820 for a centralized process deployment and logging medium. Attended robots may help the human user accomplish various tasks and may be triggered by user events. In some embodiments, processes cannot be started from conductor 820 on this type of robot and/or they cannot run under a locked screen. In certain embodiments, attended robots can only be started from a robot tray or from a command prompt. Attended robots should run under human supervision in some embodiments.

Unattended robots run unattended in virtual environments and can automate many processes. Unattended robots may be responsible for remote execution, monitoring, scheduling, and providing support for work queues. Debugging for all robot types may be run in designer 810 in some embodiments. Both attended and unattended robots may automate various systems and applications including, but not limited to, mainframes, web applications, VMs, enterprise applications (e.g., those produced by SAP^{®}, Salesforce^{®}, Oracle^{®}, etc.), and computing system applications (e.g., desktop and laptop applications, mobile device applications, wearable computer applications, etc.).

Conductor 820 may have various capabilities including, but not limited to, provisioning, deployment, configuration, queueing, monitoring, logging, and/or providing interconnectivity. Provisioning may include creating and maintenance of connections between robots 830, AI agents 850, and/or AOPs 870 and conductor 820 (e.g., a web application). Deployment may include assuring the correct delivery of package versions to assigned robots 830, AI agents 850, and/or AOPs for execution. Configuration may include maintenance and delivery of RPA robot and AI agent environments and process configurations. Queueing may include providing management of queues and queue items. Monitoring may include keeping track of robot and Al agent identification data and maintaining user permissions. Logging may include storing and indexing logs to a database (e.g., a structured query language (SQL) database or a "not only" SQL (NoSQL) database) and/or another storage mechanism (e.g., ElasticSearch^{®}, which provides the ability to store and quickly query large datasets). Conductor 820 may provide interconnectivity by acting as the centralized point of communication for third-party solutions and/or applications.

Robots 830 are execution agents that implement workflows built in designer 810. One commercial example of some embodiments of robot(s) 830 is UiPath Robots^{™}. In some embodiments, RPA robots 830 install the Microsoft Windows^{®} Service Control Manager (SCM)-managed service by default. As a result, such RPA robots 830 can open interactive Windows^{®} sessions under the local system account, and have the rights of a Windows^{®} service.

In some embodiments, RPA robots 830 can be installed in a user mode. For such robots 830, this means they have the same rights as the user under which a given RPA robot 830 has been installed. This feature may also be available for high density (HD) robots, which ensure full utilization of each machine at its maximum potential. In some embodiments, any type of RPA robot 830 may be configured in an HD environment.

RPA robots 830 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows^{®} sessions and act as a proxy between conductor 820 and the execution hosts (i.e., the computing systems on which robots 830 are executed). These services are trusted with and manage the credentials for RPA robots 830. A console application is launched by the SCM under the local system.

User mode robot services in some embodiments manage and monitor Windows^{®} sessions and act as a proxy between conductor 820 and the execution hosts. User mode robot services may be trusted with and manage the credentials for RPA robots 830. A Windows^{®} application may automatically be launched if the SCM-managed robot service is not installed.

Executors may run given jobs under a Windows^{®} session (i.e., they may execute workflows. Executors may be aware of per-monitor dots per inch (DPI) settings. Agents may be Windows^{®} Presentation Foundation (WPF) applications that display the available jobs in the system tray window. Note that these agents differ from Al agents 850. Agents may be a client of the service and may request to start or stop jobs and change settings. The command line is a client of the service. The command line is a console application that can request to start jobs and wait for their output.

Having components of robots 830 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from designer 810 may also be independent of browser zoom level in some embodiments. For applications that are DPI-unaware or intentionally marked as unaware, DPI may be disabled in some embodiments.

Agentic automation and RPA system 800 in this embodiment is part of a hyper-automation system, such as hyper-automation system 100 of FIG. 1. Developers may use designer 810 to build and test RPAs, AOPs, and AI agents that utilize Al/ML models deployed in core hyper-automation system 840 (e.g., as part of an Al center thereof). Such RPA robots may send input for execution of the AI/ML model(s) and receive output therefrom via core hyper-automation system 840.

One or more of RPA robots 830 may be listeners, as described above. These listeners may provide information to core hyper-automation system 840 regarding what users are doing when they use their computing systems. This information may then be used by core hyper-automation system for process mining, task mining, task capture, etc.

An assistant/chatbot (not shown) may be provided on user computing systems to allow users to launch RPA local robots. The assistant/chatbot may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which an RPA robot or Al agent is executing or on another computing system that the robot or Al agent provides information to. For instance, if a robot calls an Al/ML model that performs CV on images for VM users, but the Al/ML model does not correctly identify a button on the screen, the user may draw a rectangle around the misidentified or non-identified component and potentially provide text with a correct identification. This information may be provided to core hyper-automation system 540 and then used later for training a new version of the AI/ML model.

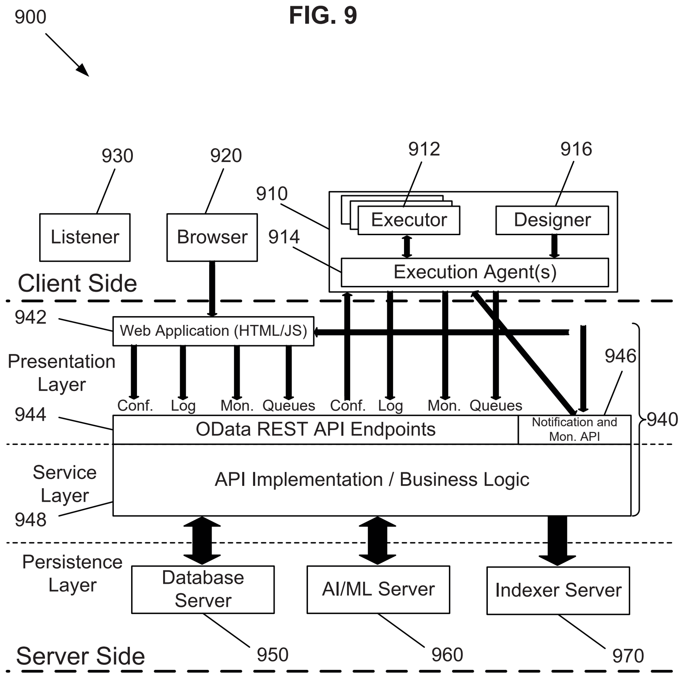

FIG. 9 is an architectural diagram illustrating a deployed RPA system 900, according to an embodiment of the present invention. In some embodiments, RPA system 900 may be a part of agentic automation and RPA system 800 of FIG. 8 and/or hyper-automation system 100 of FIG. 1. It should be noted that the architecture of deployed RPA system 900 may not be used in some embodiments. Deployed RPA system 900 may be a cloud-based system, an on-premises system, a desktop-based system that offers enterprise level, user level, or device level automation solutions for automation of different computing processes, etc.

It should be noted that the client side, the server side, or both, may include any desired number of computing systems without deviating from the scope of the invention. On the client side, a robot application 910 includes executors 912, an execution agent 914, and a designer 916. However, in some embodiments, designer 916 may not be running on the same computing system as executors 912 and execution agent 914. Executors 912 are running processes. Several business projects may run simultaneously. Execution agent 914 (e.g., a Windows^{®} service) is the single point of contact for all executors 912 in this embodiment. All messages in this embodiment are logged into conductor 940, which processes them further via database server 950, an AI/ML server 960, an indexer server 970, or any combination thereof. As discussed above with respect to FIG. 8, executors 912 may be robot components.

In some embodiments, an RPA robot represents an association between a machine name and a username. The robot may manage multiple executors at the same time. On computing systems that support multiple interactive sessions running simultaneously (e.g., Windows^{®} Server 2012), multiple robots may be running at the same time, each in a separate Windows^{®} session using a unique username. This is referred to as HD robots above.

Execution agent 914 is also responsible for sending the status of the robot (e.g., periodically sending a "heartbeat" message indicating that the robot is still functioning) and downloading the required version of the package to be executed. The communication between execution agent 914 and conductor 940 is always initiated by execution agent 914 in some embodiments. In the notification scenario, execution agent 914 may open a WebSocket channel that is later used by conductor 940 to send commands to the robot (e.g., start, stop, etc.).

It should be noted that, while not shown here in order to reduce clutter in FIG. 9, Al agents can also interact with conductor 940, as discussed above with respect to FIGS. 1 and 8, for example. Conductor 940 may orchestrate the operations of the Al agents. Conductor 940 may also facilitate interaction between the Al agents and Al/ML models via Al/ML server 960, which may store and/or facilitate access to generative Al models.

A listener 930 monitors and records data pertaining to user interactions with an attended computing system and/or operations of an unattended computing system on which listener 930 resides. Listener 930 may be an RPA robot, part of an operating system, a downloadable application for the respective computing system, or any other software and/or hardware without deviating from the scope of the invention. Indeed, in some embodiments, the logic of the listener is implemented partially or completely via physical hardware.

On the server side, a presentation layer (web application 942, Open Data Protocol (oData) Representative State Transfer (REST) Application Programming Interface (API) endpoints 944, and notification and monitoring 946), a service layer (API implementation / business logic 948), and a persistence layer (database server 950, Al/ML server 960, and indexer server 970) are included. Conductor 940 includes web application 942, oData REST API endpoints 944, notification and monitoring 946, and API implementation / business logic 948. In some embodiments, most actions that a user performs in the interface of conductor 940 (e.g., via browser 920) are performed by calling various APIs. Such actions may include, but are not limited to, starting jobs on robots, adding/removing data in queues, scheduling jobs to run unattended, etc. without deviating from the scope of the invention. Web application 942 is the visual layer of the server platform. In this embodiment, web application 942 uses Hypertext Markup Language (HTML) and JavaScript (JS). However, any desired markup languages, script languages, or any other formats may be used without deviating from the scope of the invention. The user interacts with web pages from web application 942 via browser 920 in this embodiment in order to perform various actions to control conductor 940. For instance, the user may create robot groups, assign packages to the robots, analyze logs per robot and/or per process, start and stop robots, etc.

In addition to web application 942, conductor 940 also includes service layer that exposes oData REST API endpoints 944. However, other endpoints may be included without deviating from the scope of the invention. The REST API is consumed by both web application 942 and execution agent 914. Execution agent 914 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 940. Queueing REST endpoints may be responsible for queues and queue item management, such as adding data to a queue, obtaining a transaction from the queue, setting the status of a transaction, etc.

Monitoring REST endpoints may monitor web application 942 and execution agent 914. Notification and monitoring API 946 may be REST endpoints that are used for registering execution agent 914, delivering configuration settings to execution agent 914, and for sending/receiving notifications from the server and execution agent 914. Notification and monitoring API 946 may also use WebSocket communication in some embodiments.

The APIs in the service layer may be accessed through configuration of an appropriate API access path in some embodiments, e.g., based on whether conductor 940 and an overall hyper-automation system have an on-premises deployment type or a cloud-based deployment type. APIs for conductor 940 may provide custom methods for querying stats about various entities registered in conductor 940. Each logical resource may be an oData entity in some embodiments. In such an entity, components such as the robot, process, queue, etc., may have properties, relationships, and operations. APIs of conductor 940 may be consumed by web application 942 and/or execution agents 914 in two ways in some embodiments: (1) by getting the API access information from conductor 940; or (2) by registering an external application to use the oAuth flow.

The persistence layer includes a trio of servers in this embodiment - database server 950 (e.g., a SQL server), Al/ML server 960 (e.g., a server providing Al/ML model serving services, such as Al center functionality) and indexer server 970. Database server 950 in this embodiment stores the configurations of the robots and Al agents, robot and AI agent groups, AOPs, associated processes, users, roles, schedules, etc. This information is managed through web application 942 in some embodiments. Database server 950 may manage queues and queue items. In some embodiments, database server 950 may store messages logged by the robots and AI agents (in addition to or in lieu of indexer server 970). Database server 950 may also store process mining, task mining, and/or task capture-related data, received from listener 930 installed on the client side, for example. While no arrow is shown between listener 930 and database 950, it should be understood that listener 930 is able to communicate with database 950, and vice versa in some embodiments. This data may be stored in the form of PDDs, images, XAML files, etc. It should be noted that structured and/or unstructured data may be stored. Listener 930 may be configured to intercept user actions, processes, tasks, and performance metrics on the respective computing system on which listener 930 resides. For example, listener 930 may record user actions (e.g., clicks, typed characters, locations, applications, active elements, times, etc.) on its respective computing system and then convert these into a suitable format to be provided to and stored in database server 950.

AI/ML server 960 facilitates incorporation of AI/ML models into automations. Pre-built AI/ML models, model templates, and various deployment options may make such functionality accessible even to those who are not data scientists. Deployed automations (e.g., RPA robots and/or AI agents) may call AI/ML models from AI/ML server 960. Performance of the AI/ML models may be monitored and be trained and improved using human-validated data. AI/ML server 960 may schedule and execute training jobs to train new versions of the AI/ML models. AI/ML model server may also store and/or access generative Al models.

AI/ML server 960 may store data pertaining to Al/ML models and ML packages for configuring various ML skills for a user at development time. An ML skill, as used herein, is a pre-built and trained ML model for a process, which may be used by an automation, for example. AI/ML server 960 may also store data pertaining to document understanding technologies and frameworks, algorithms and software packages for various AI/ML capabilities including, but not limited to, intent analysis, NLP, speech analysis, different types of AI/ML models, etc.

Indexer server 970, which is optional in some embodiments, stores and indexes the information logged by the robots. In certain embodiments, indexer server 970 may be disabled through configuration settings. In some embodiments, indexer server 970 uses ElasticSearch^{®}, which is an open source project full-text search engine. Messages logged by robots (e.g., using activities like log message or write line) may be sent through the logging REST endpoint(s) to indexer server 970, where they are indexed for future utilization.

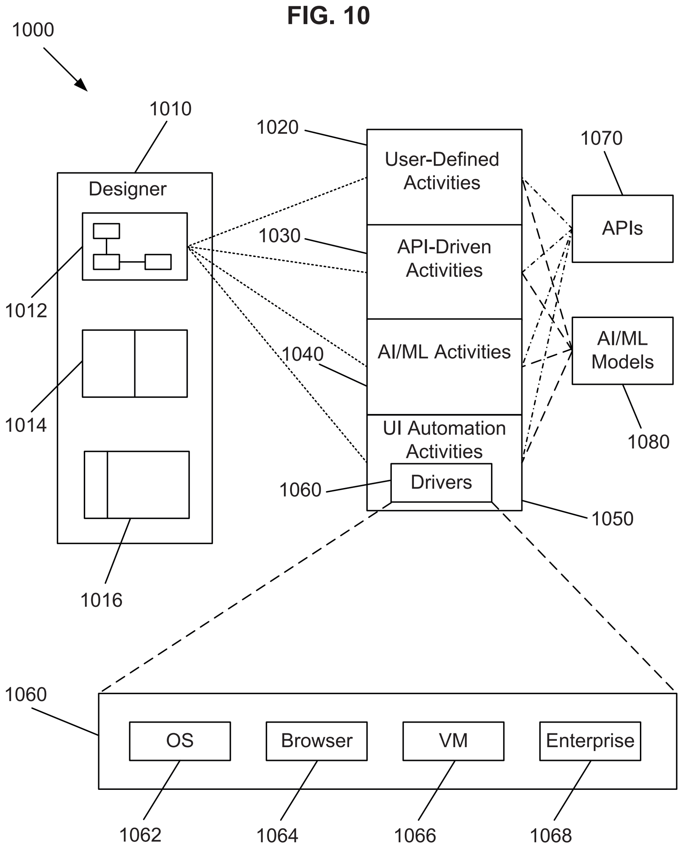

FIG. 10 is an architectural diagram illustrating the relationship 1000 between a designer 1010, activities 1020, 1030, 1040, 1050, drivers 1060, APIs 1070, and Al/ML models 1080, according to an embodiment of the present invention. Per the above, a developer uses designer 1010 to develop workflows and automations that are executed by RPA robots, AI agents, and AOP engines. The developer can design and configure RPA robot workflows 1012, design and configure agentic automations 1014 for Al agents (e.g., providing natural language descriptions, context grounding, tools, etc. for Al agents), and design and configure AOPs 1016. See FIGS. 4A, 4B, 5, and 6, for example. The various types of activities may be displayed to the developer in some embodiments. Designer 1010 may be local to the user's computing system or remote thereto (e.g., accessed via VM or a local web browser interacting with a remote web server). Workflows for RPA robots may include user-defined activities 1020, API-driven activities 1030, Al/ML activities 1040, and/or UI automation activities 1050. User-defined activities 1020 and API-driven activities 1040 interact with applications via their APIs. User-defined activities 1020 and/or Al/ML activities 1040 may call one or more Al/ML models 1080 in some embodiments, which may be located locally to the computing system on which the robot is operating and/or remotely thereto.

Some embodiments are able to identify non-textual visual components in an image, which is called CV herein. However, it should be noted that in some embodiments, CV incorporates OCR. CV may be performed at least in part by Al/ML model(s) 1080. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 1020. However, any number and/or type of activities may be used without deviating from the scope of the invention.

UI automation activities 1050 are a subset of special, lower-level activities that are written in lower-level code and facilitate interactions with the screen. UI automation activities 1050 facilitate these interactions via drivers 1060 that allow the robot to interact with the desired software. For instance, drivers 1060 may include operating system (OS) drivers 1062, browser drivers 1064, VM drivers 1066, enterprise application drivers 1068, etc. One or more of AI/ML models 1080 may be used by UI automation activities 1050 in order to perform interactions with the computing system in some embodiments. In certain embodiments, AI/ML models 1080 may augment drivers 1060 or replace them completely. Indeed, in certain embodiments, drivers 1060 are not included.

Drivers 1060 may interact with the OS at a low level looking for hooks, monitoring for keys, etc. via OS drivers 1062. Drivers 1060 may facilitate integration with Chrome^{®}, IE^{®}, Citrix^{®}, SAP^{®}, etc. For instance, the "click" activity performs the same role in these different applications via drivers 1060.

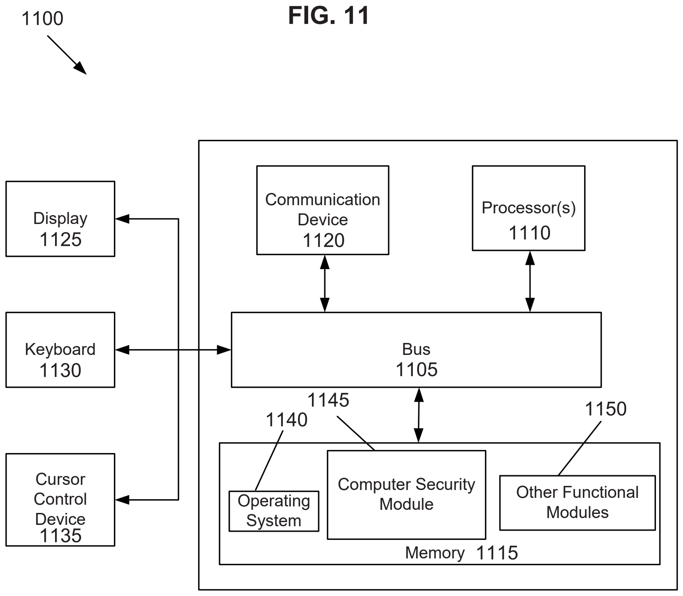

FIG. 11 is an architectural diagram illustrating a computing system 1100 configured to implement embodiments of the present invention. In some embodiments, computing system 1100 may be one or more of the computing systems depicted and/or described herein. In certain embodiments, computing system 1100 may be part of a hyper-automation system, such as that shown in FIGS. 1 and 8. Computing system 1100 includes a bus 1105 or other communication mechanism for communicating information, and processor(s) 1110 coupled to bus 1105 for processing information. Processor(s) 1110 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 1110 may also have multiple processing cores, and at least some of the cores may be configured to perform specific functions. Multi-parallel processing may be used in some embodiments. In certain embodiments, at least one of processor(s) 1110 may be a neuromorphic circuit that includes processing elements that mimic biological neurons. In some embodiments, neuromorphic circuits may not require the typical components of a Von Neumann computing architecture.

Computing system 1100 further includes a memory 1115 for storing information and instructions to be executed by processor(s) 1110. Memory 1115 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 1110 and may include volatile media, non-volatile media, or both. The media may also be removable, non-removable, or both. Computing system 1100 includes a communication device 1120, such as a transceiver, to provide access to a communications network via a wireless and/or wired connection. In some embodiments, communication device 1120 may include one or more antennas that are singular, arrayed, phased, switched, beamforming, beamsteering, a combination thereof, and or any other antenna configuration without deviating from the scope of the invention.

Processor(s) 1110 are further coupled via bus 1105 to a display 1125. Any suitable display device and haptic I/O may be used without deviating from the scope of the invention. A keyboard 1130 and a cursor control device 1135, such as a computer mouse, a touchpad, etc., are further coupled to bus 1105 to enable a user to interface with computing system 1100. However, in certain embodiments, a physical keyboard and mouse may not be present, and the user may interact with the device solely through display 1125 and/or a touchpad (not shown). Any type and combination of input devices may be used as a matter of design choice. In certain embodiments, no physical input device and/or display is present. For instance, the user may interact with computing system 1100 remotely via another computing system in communication therewith, or computing system 1100 may operate autonomously.

Memory 1115 stores software modules that provide functionality when executed by processor(s) 1110. The modules include an operating system 1140 for computing system 1100. The modules further include a computer security module 1145 that is configured to perform all or part of the processes described herein or derivatives thereof. Computing system 1100 may include one or more additional functional modules 1150 that include additional functionality.

One skilled in the art will appreciate that a "computing system" could be embodied as a server, an embedded computing system, a personal computer, a console, a personal digital assistant (PDA), a mobile phone, a tablet computing device, a smart watch, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a LAN, a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

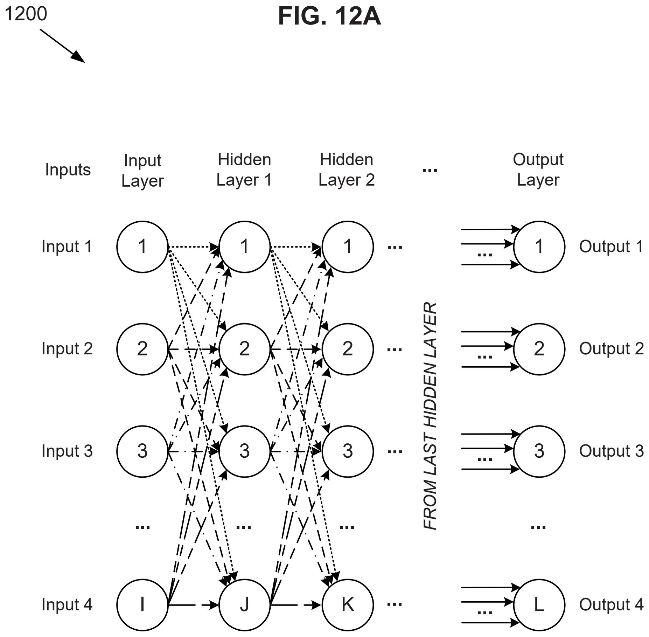

Various types of Al/ML models may be trained and deployed without deviating from the scope of the invention. For instance, FIG. 12A illustrates an example of a neural network 1200 that has been trained according to an embodiment of the present invention. Neural network 1200 includes a number of hidden layers. Both DLNNs and shallow learning neural networks (SLNNs) usually have multiple layers, although SLNNs may only have one or two layers in some cases, and normally fewer than DLNNs. Typically, the neural network architecture includes an input layer, multiple intermediate layers, and an output layer, as is the case in neural network 1200.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 12A, input 1, input 2, input 3, input 4, etc. are provided as the input layer and fed as inputs to the J neurons of hidden layer 1. Various other inputs are possible, including, but not limited to, computing system state information, published automations, business rules, information regarding what RPA workflows and/or tasks pertain to, initial definitions of automations, process automation documents, etc. While all of these inputs are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 receives inputs from hidden layer 1, hidden layer 3 receives inputs from hidden layer 2, and so on for all hidden layers until the last hidden layer provides its outputs as inputs for the output layer. While multiple suggestions are shown here as output, in some embodiments, only a single output suggestion is provided. In certain embodiments, the suggestions are ranked based on confidence scores. In this embodiment, the outputs are output 1, output 2, output 3, output 4, etc.

It should be noted that numbers of neurons I, J, K, and L are not necessarily equal. Thus, any desired number of layers may be used for a given layer of neural network 1200 without deviating from the scope of the invention. Indeed, in certain embodiments, the types of neurons in a given layer may not all be the same.

Neural network 1200 is trained to assign confidence score(s) to appropriate outputs. In order to reduce predictions that are inaccurate, only those results with a confidence score that meets or exceeds a confidence threshold may be provided in some embodiments. For instance, if the confidence threshold is 80%, outputs with confidence scores exceeding this amount may be used and the rest may be ignored.

Neural networks are probabilistic constructs that typically have confidence score(s). This may be a score learned by the AI/ML model based on how often a similar input was correctly identified during training. Some common types of confidence scores include a decimal number between 0 and 1 (which can be interpreted as a confidence percentage as well), a number between negative ∞ and positive ∞, a set of expressions (e.g., "low," "medium," and "high"), etc. Various post-processing calibration techniques may also be employed in an attempt to obtain a more accurate confidence score, such as temperature scaling, batch normalization, weight decay, negative log likelihood (NLL), etc.

"Neurons" in a neural network are implemented algorithmically as mathematical functions that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

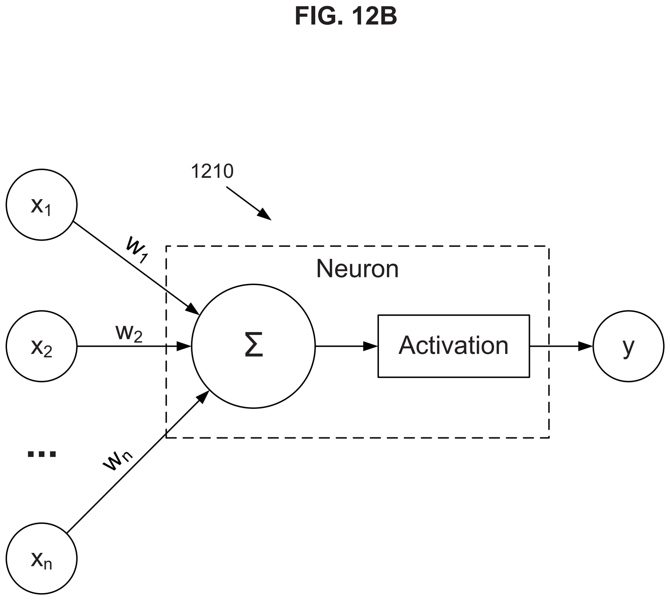

An example of a neuron 1210 is shown in FIG. 12B. Inputs *x*₁*, x*₂*, ...* , *xₙ* from a preceding layer are assigned respective weights *w*₁*, w*₂*,* ..., *wₙ.* Thus, the collective input from preceding neuron 1 is *w*₁*x*₁. These weighted inputs are used for the neuron's summation function modified by a bias, such as: ${\sum }_{i = 1}^{m} \left({w}_{i}{x}_{i}\right) + bias$

This summation is compared against an activation function *f*(*x*) to determine whether the neuron "fires". For instance, *f*(*x*) may be given by: $f \left(x\right) = \left\{\begin{matrix}1 if \sum wx + bias \geq 0 \\ 0 if \sum wx + bias < 0\end{matrix}\right.$

The output *y* of neuron 1210 may thus be given by: $y = f \left(x\right) {\sum }_{i = 1}^{m} \left({w}_{i}{x}_{i}\right) + bias$

In this case, neuron 1210 is a single-layer perceptron. However, any suitable neuron type or combination of neuron types may be used without deviating from the scope of the invention. It should also be noted that the ranges of values of the weights and/or the output value(s) of the activation function may differ in some embodiments without deviating from the scope of the invention.

A goal, or "reward function," is often employed. A reward function explores intermediate transitions and steps with both short-term and long-term rewards to guide the search of a state space and attempt to achieve a goal (e.g., finding the most accurate answers to user inquiries based on associated metrics). During training, various labeled data is fed through neural network 1200. Successful identifications strengthen weights for inputs to neurons, whereas unsuccessful identifications weaken them. A cost function, such as mean square error (MSE) or gradient descent may be used to punish predictions that are slightly wrong much less than predictions that are very wrong. If the performance of the Al/ML model is not improving after a certain number of training iterations, a data scientist may modify the reward function, provide corrections of incorrect predictions, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input x is processed through a series of *N* nonlinear activity functions *fᵢ* between each layer *i* = 1, *..., N* of the network, with the output at a given layer first multiplied by a synaptic matrix *Wᵢ*, and with a bias vector *bᵢ* added. The network output *o*, given by $o = {f}_{N} \left({W}_{N}{f}_{N - 1}\left({W}_{N - 1}{f}_{N - 2}\left(…{f}_{1}\left({W}_{1}x+{b}_{1}\right)…\right)+{b}_{N - 1}\right)+{b}_{N}\right)$

In some embodiments, o is compared with a target output *t*, resulting in an error $E = \frac{1}{2} {\left‖o-t\right‖}^{2}$, which is desired to be minimized.

Optimization in the form of a gradient descent procedure may be used to minimize the error by modifying the synaptic weights *Wᵢ* for each layer. The gradient descent procedure requires the computation of the output o given an input x corresponding to a known target output *t,* and producing an error *o*-- *t.* This global error is then propagated backwards giving local errors for weight updates with computations similar to, but not exactly the same as, those used for forward propagation. In particular, the backpropagation step typically requires an activity function of the form ${p}_{j} \left({n}_{j}\right) = {f}_{j}^{′} \left({n}_{j}\right)$, where *nⱼ* is the network activity at layer *j* (i.e., *nⱼ = Wⱼo*_{*j*-1} *+ bⱼ*) where *oⱼ = fⱼ*(*nⱼ*) and the apostrophe ' denotes the derivative of the activity function *f*.

The weight updates may be computed via the formulae: ${d}_{j} = \left\{\begin{matrix}\left(o-t\right) ∘ {p}_{j} \left({n}_{j}\right) , & j = N \\ {W}_{j + 1}^{T} {d}_{j + 1} ∘ {p}_{j} \left({n}_{j}\right) , & j < N\end{matrix}\right.$ $\frac{\partial E}{\partial {W}_{j + 1}} = {d}_{j + 1} {\left({o}_{j}\right)}^{T}$ $\frac{\partial E}{\partial {b}_{j + 1}} = {d}_{j + 1}$ ${W}_{j}^{new} = {W}_{j}^{old} - η \frac{\partial E}{\partial {W}_{j}}$ ${b}_{j}^{new} = {b}_{j}^{old} - η \frac{\partial E}{\partial {b}_{j}}$
where ∘ denotes a Hadamard product (i.e., the element-wise product of two vectors), ^{T} denotes the matrix transpose, and *oⱼ* denotes *fⱼ*(*Wⱼo*_{*j*-1} *+ bⱼ*)*,* with *o*₀ *= x.* Here, the learning rate *η* is chosen with respect to machine learning considerations. Below, *η* is related to the neural Hebbian learning mechanism used in the neural implementation. Note that the synapses *W* and *b* can be combined into one large synaptic matrix, where it is assumed that the input vector has appended ones, and extra columns representing the *b* synapses are subsumed to *W*.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the invention. Once trained on the training data, the AI/ML model may be tested on a set of evaluation data that the AI/ML model has not encountered before. This helps to ensure that the Al/ML model is not "over fit" such that it performs well on the training data but does not perform well on other data.

In some embodiments, it may not be known what accuracy level is possible for the AI/ML model to achieve. Accordingly, if the accuracy of the AI/ML model is starting to drop when analyzing the evaluation data (i.e., the model is performing well on the training data, but is starting to perform less well on the evaluation data), the Al/ML model may go through more epochs of training on the training data (and/or new training data). In some embodiments, the AI/ML model is only deployed if the accuracy reaches a certain level or if the accuracy of the trained AI/ML model is superior to an existing deployed Al/ML model. In certain embodiments, a collection of trained Al/ML models may be used to accomplish a task. For example, one AI/ML model may be trained to recognize images, another may recognize text, yet another may recognize semantic and/or ontological associations, etc.

It should be noted that in addition to or in lieu of neural networks, some embodiments may use transformer networks such as SentenceTransformers^{™}, which is a Python^{™} framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

NLP models such as word2vec, BERT, GPT-3, ChatGPT, other LLMs, etc. may be used in some embodiments to facilitate semantic understanding and provide more accurate and human-like answers, per the above. Other techniques, such as clustering algorithms, may be used to find similarities between groups of elements. Clustering algorithms may include, but are not limited to, density-based algorithms, distribution-based algorithms, centroid-based algorithms, hierarchy-based algorithms. K-means clustering algorithms, the DBSCAN clustering algorithm, the Gaussian mixture model (GMM) algorithms, the balance iterative reducing and clustering using hierarchies (BIRCH) algorithm, etc. Such techniques may also assist with categorization.

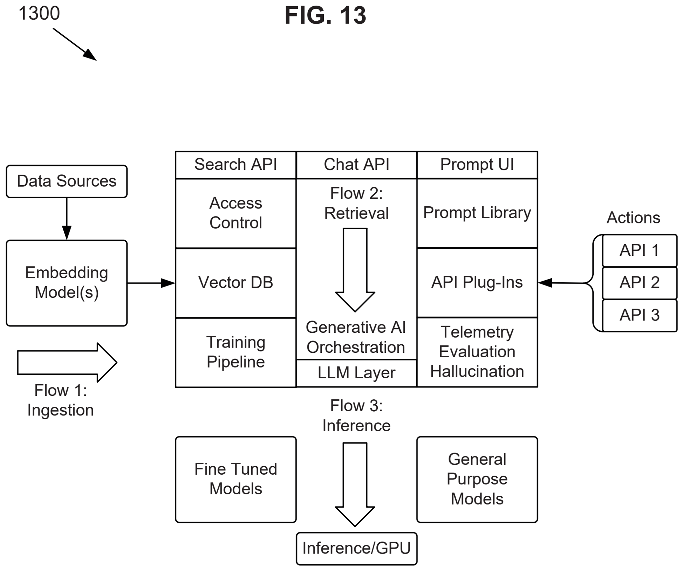

FIG. 13 is an architectural diagram illustrating a reference architecture 1300 for a generative Al model, according to an embodiment of the present invention. The architecture consists of several layers: API plug-ins, a prompt library, vector data source ingestion, access processing control, a model-training pipeline, an assessment layer to assess hallucination/telemetry/evaluations, a BYOM embedding layer, and an LLM orchestration layer. There are also retrieval plug-ins, access control plug-ins, and API plug-ins that integrate into enterprise systems.

There are three main flows in this embodiment:
Data Ingestion and Training Flow: Data is read from multiple data stores, preprocessed, chunked, and trained through an embedding model (e.g., retrieval augmented generation (RAG)) and a training pipeline (i.e., fine-tuning). The vector database stores the chunked document embeddings that allow for better semantic, similarity-based data retrievals.
Prompt Augmentation Using Data Retrieval: Once a user query arrives at the API layer, the prompt is selected, followed by data retrievals through the vector database or API plug-ins to get the right contextual data before the prompt is passed to the LLM layer.
LLM Inference: This is where there is a choice to use general purpose foundation models from or a self-hosted foundation model. Fine-tuned models may be used when tuned for a specific task or use case. The response is evaluated for accuracy and other metrics, including hallucinations.

It should be noted that in some embodiments, a generative Al model with multiple "heads" may be used. Heads refer to output layers of the generative Al model. Generative Al models, such as generative AI models 172 in FIG. 1, typically have a sequence of layers, and each head will often share the first few layers of the model before diverging into their own distinct layers.

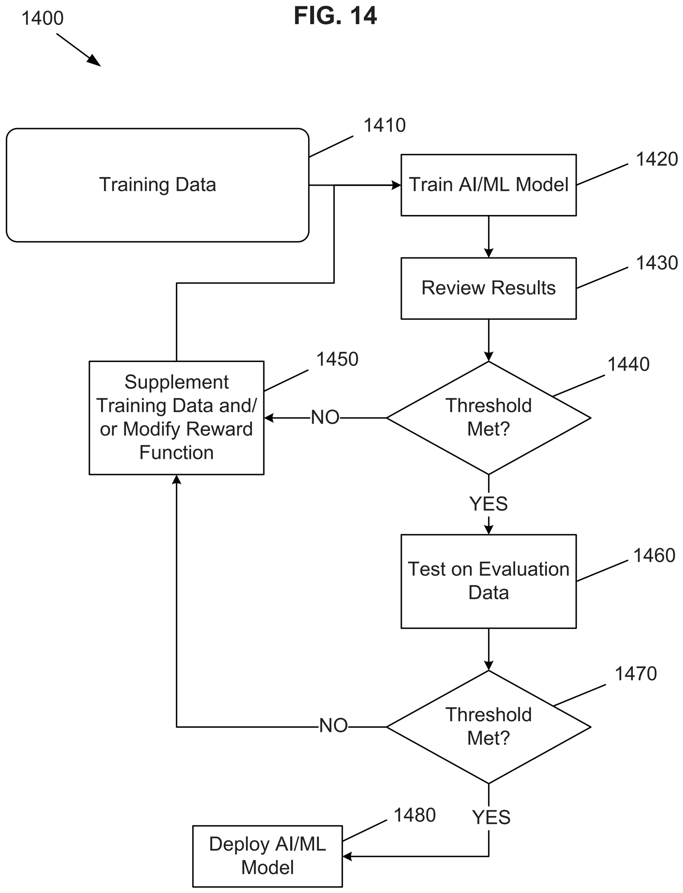

FIG. 14 is a flowchart illustrating a process 1400 for training Al/ML model(s), according to an embodiment of the present invention. In some embodiments, the Al/ML model(s) may be generative AI models, per the above. In the case of neural networks, the architecture typically includes multiple layers of neurons, including input, output, and hidden layers. See FIGS. 12A and 12B, for example. The hidden layers in between process the input data and generate intermediate representations of the input that are used to generate the output. These hidden layers can include various types of neurons, such as convolutional neurons, recurrent neurons, and/or transformer neurons. Generative Al models may also have various layers.

The training process in some embodiments begins with providing training data, etc., whether labeled or unlabeled, at 1410. In the case of generative Al models, which are often generally trained, the training process may be skipped unless fine-tuned models are desired, as discussed in more detail below. The Al/ML model is then trained over multiple epochs at 1420 and results are reviewed at 1430. While various types of Al/ML models may be used, LLMs and other generative AI models are typically trained (fine-tuned) using a process called "supervised learning", which is also discussed above. Supervised learning involves providing the model with a large dataset, which the model uses to learn the relationships between the inputs and outputs. During the training process, the model adjusts the weights and biases of the neurons in the neural network to minimize the difference between the predicted outputs and the actual outputs in the training dataset.

One aspect of the models in some embodiments is the use of transfer learning. For instance, transfer learning may take advantage of a pretrained model, such as ChatGPT, which is fine-tuned on a specific task or domain in step 1420. This allows the model to leverage the knowledge already learned from the pretraining phase and adapt it to a specific application via the training phase of step 1420.

The pretraining phase involves training the model on an initial set of training data that may be more general. During this phase, the model learns relationships in the data. In the fine-tuning phase (e.g., performed during step 1420 in addition to or in lieu of the initial training phase in some embodiments if a pretrained model is used as the initial basis for the final model), the pretrained model is adapted to a specific task or domain by training the model on a smaller dataset that is specific to the task. For instance, in some embodiments, the model may be focused on certain types(s) of data sources. This may help the model to more accurately identify data elements therein than a generative AI model that is pretrained alone. Fine-tuning allows the model to learn the nuances of the source, such as the specific vocabulary and syntax, certain graphical characteristics, certain data formats, etc., without requiring as much data as would be necessary to train the model from scratch. By leveraging the knowledge learned in the pretraining phase, the fine-tuned model can achieve state-of-the-art performance on specific tasks with relatively little additional training data.

If the AI/ML model fails to meet a desired confidence threshold at 1440 in some embodiments, the training data is supplemented and/or the reward function is modified to help the AI/ML model achieve its objectives better at 1450 and the process returns to step 1420. If the AI/ML model meets the confidence threshold at 14140, the AI/ML model is tested on evaluation data at 1460 to ensure that the Al/ML model generalizes well and that the Al/ML model is not over fit with respect to the training data. The evaluation data includes information that the Al/ML model has not processed before. If the confidence threshold is met at 1470 for the evaluation data, the Al/ML model is deployed at 1480. If not, the process returns to step 1450 and the AI/ML model is trained further.

Embodiments described herein provide for agentic automation for computer security. Agentic automation is implemented by AI agents for evaluating computer security issues of a computer system. Such Al agents are implemented using Al/ML models to make probabilistic decisions independently and autonomously in a non-deterministic manner. Such AI agents cognitively monitor computing environments to ensure robust security based on analysis of probes and triggers. The Al agents receive computer security data as input from various sources and utilize automated processes, tools, etc. to assess the relevance and impact of emerging issues. Advantageously, Al agents enable the processing of very large amounts (e.g., gigabytes, terabytes, petabytes, or more) of computer security data for evaluating the computer security issues of the computer system with increased accuracy and response times that would not be possible by human-implemented processes, whether mental or by hand. Further, agentic automation by AI agents improves memory usage by requiring less storage for data and increases processor efficiency by reducing the number of calls and actions involved in computer security as compared with conventional approaches.

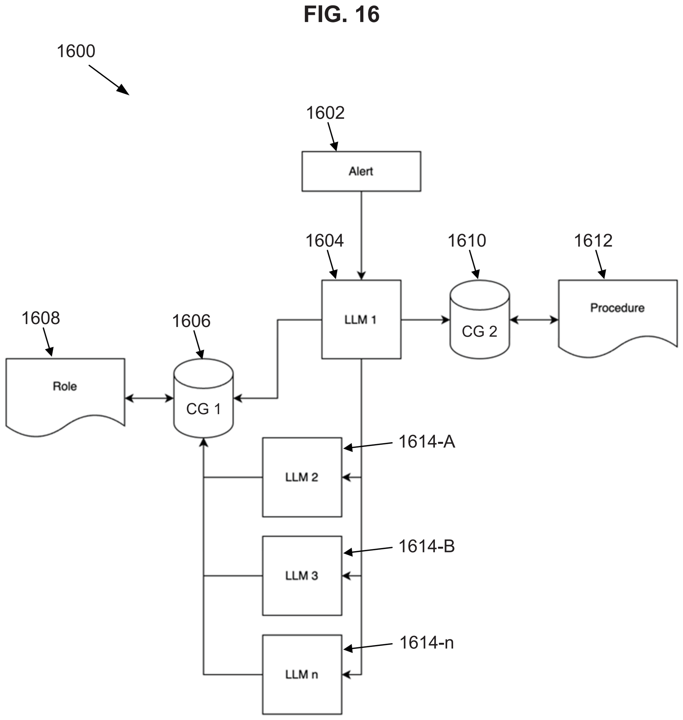

FIG. 15 shows a method 1500 for evaluating a computer security issue of a computer system, in accordance with one or more embodiments. Method 1500 may be performed by one or more computing systems, such as, e.g. computing system 1100 of FIG. 11. FIG. 16 shows a workflow 1600 for evaluating security of a computer system, in accordance with one or more embodiments. Method 1500 of FIG. 15 and workflow 1600 of FIG. 16 will be described together.

At step 1502 of FIG. 15, an alert for a computer security issue of a computer system is received. In one example, as shown in workflow 1600 of FIG. 16, the alert is alert 1602. The computer system may comprise, for example, one or more computing devices (e.g., personal computers, laptop computers, servers, mobile phones, tablet computing devices, smart watches, loT devices) or networks of such computing devices. In one example, the computer system may comprise computing system 1100 of FIG. 11.

In one embodiment, the alert is generated by and received from a computer security monitoring/alert system, such as, e.g., a SIEM (security information and event management) system. The computer security monitoring system collects and analyzes computer security data of the computer system to detect computer security issues (e.g., threats) and generate alert of the detected computer security issues.

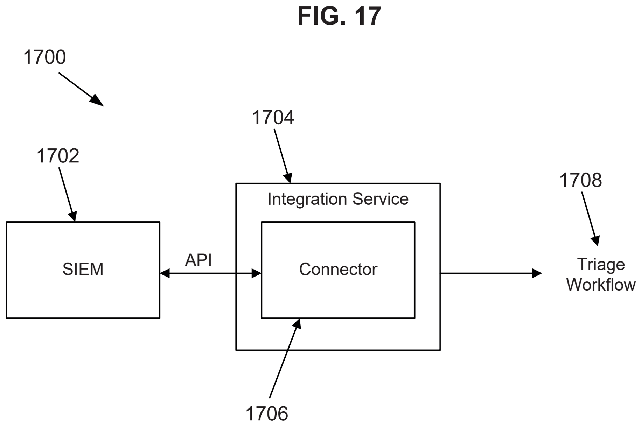

FIG. 17 shows a system diagram 1700 for receiving an alert of a computer security issue, in accordance with one or more embodiments. In system diagram 1700, SIEM system 1702 generates an alert. Connector 1706 receives the alert from SIEM system 1702 via one or more APIs (application programming interfaces). Connector 1706 is integrated with integration service 1704. Integration service 1704 is an API service that connects various services and systems. Connector 1706 listens for an alert triggered by SIEM system 1702, pulls data relating to the alert, and moves the data relating to the alert into a triage workflow 1708 for determining a strategy for mitigating the security issue and for determining one or more additional Al agents from a pool of Al agents for mitigating the computer security issue (at step 1504 of FIG. 15). In one embodiment, the data relating to the alert pulled by connector 1706 comprises the following:
- alert ID: The identifier placed on the computer security alert by SIEM system 1702. This is a unique identifier and will help track the identification of the computer security alert being triaged.
- alert URL: The URL (uniform resource locator) that directly connects to the computer security alert, e.g., for use by a user.
- alert connection string: The connection to be used by the API and by connector 1706 in integration service 1704.
- alert title: The title of the computer security alert created by SIEM system 1702.
- detection rule ID: The identifier of the detection analytic rule that includes the logic that generated the computer security alert.
- detection rule name: The name of the detection analytic rule that includes the logic that generated the computer security alert.
- key artifacts: A dictionary of key artifacts that triggered the computer security alert.
- alert context: A multi-line string of the computer security alert. This will include the alert summary and related activities involved in the computer security alert.
- alert sources: The sources of data that were analyzed in triggering the computer security alert.
- alert severity: The severity of the computer security alert.

Referring back to step 1502 of FIG. 15, in one embodiment, the alert is received from one or more probes and/or one or more triggers monitoring the computer security data. The alert may be received by a connector from the one or more probes and/or the one or more triggers monitoring the computer security data, e.g., via one or more APIs.

Probes are tools, devices, or software components for continuously capturing, monitoring, and/or collecting data about activity and security events of the computer system. Probes act as sensors or monitoring agents to gather information at various points within a computer system. Probes may include, for example, 1) network probes (e.g., simple network management protocol probes) for monitoring network traffic, bandwidth usage, packet flow, etc., 2) host-based probes (e.g., endpoint detection and response tools) for monitoring local activities on a computer or server, 3) application probes (e.g., web application monitoring tools) for monitoring specific applications executing on a computing device, and/or 4) intrusion detection system probes (e.g., snort sensors) for capturing and analyzing packets for signs of malicious activity.

Triggers are predefined conditions that, when met, initiate an alert, action, or response to enable automated responses to suspicious or anomalous activity in the computer system. Triggers may include, for example, 1) threshold-based triggers activated when a metrics (e.g., processor usage or packet loss) exceeds a predefined threshold, 2) anomaly-based triggers activated when actual behavior deviates significantly from expected behavior, 3) signature-based triggers activated when computer system activity matches known patterns of malicious behavior, 4) event-based triggers activated by specific events or actions, and/or 5) time-based triggers activated based on a timing or frequency of events.

In one embodiment, the alert may be received from a user manually triggering the alert based on the computer security data.

The computer security data (from which the computer security alert is triggered) may comprise any suitable data relating to security of the computer system. For example, the computer security data may comprise logs from firewalls, services, applications, computer processes (e.g., RPA processes), etc. In another example, the computer security data comprises news articles. News articles may comprise information of emerging computer security issues. For example, a news article may comprise reports of a security breach on an operating system. The computer security data may comprise any other suitable data relating to the security of the computer system (e.g., policies of the computer system, source code of applications on the computer system, etc.).

The computer security alert may be received, for example, by receiving the computer security alert from a computer system such as, e.g., a SIEM (e.g., display 1125, keyboard 1130, or cursor control device 1135 of FIG. 11), by loading the computer security alert from a storage or memory of a computer system (e.g., memory 1115 of FIG. 11), or by receiving the computer security alert from a remote computer system (e.g., via communication device 1120 of FIG. 11). The computer security alert may be received via one or more APIs.

At step 1504 of FIG. 15, an initial AI agent determines 1) a strategy for evaluating the computer security issue and 2) one or more additional Al agents from a pool of AI agents for evaluating the computer security issue. In one example, as shown in workflow 1600 of FIG. 16, the initial AI agent is LLM1 1604 and the one or more additional Al agents are LLM 2 1614-A, LLM 31614-B, . . ., LLM n 1614-n.

The Al agents (i.e., the initial Al agent and the one or more additional AI agents) are implemented using Al/ML models to make probabilistic decisions independently and autonomously in a non-deterministic manner. In one or more examples, the Al agents may be Al agent 210 of FIG. 2, Al agents of AI agent pool 320 of FIG. 3, Al agents 520 of FIG. 5, Al agent 750 of FIG. 7, or Al agent(s) 850 of FIG. 8. In one embodiment, the AI agents are implemented using a pretrained language model. For example, the Al agents may be implemented using an LLM, such as, e.g., word2vec, BERT, GPT-3, ChatGPT, etc. However, the AI agents may also be implemented using a small language model that has relatively fewer parameters than an LLM. Any other suitable types of language models may also be utilized for implementing the AI agents, such as, e.g., recurrent neural network (RNN)-based models, transformer-based models, etc. The language model may be fine-tuned for the computer security domain.

The AI agents are configured using, for example, a designer application. The designer application may be designer applications 154 of FIG. 1, agent service interface 400 of FIGS. 4A and 4B, designer application 710 of FIG. 7, designer 810 of FIG. 8, or designer 1010 of FIG. 10. A user (e.g., developer) interacts with the designer application to prompt the Al agents with instructions and context for context grounding to define roles and tasks the Al agents are to perform and to define tools (e.g., other Al agents, RPA robots, automations, applications, etc.) the AI agents may utilize to perform the tasks.

Once configured, the Al agents are executed to perform step 1404 of FIG. 14 for agentic automation. Execution of the AI agents is managed by a conductor (also referred to as an orchestrator). In one or more examples, the conductor may be conductor 350 of FIG. 3, conductor application 730, conductor 820 of FIG. 8, or conductor 940 of FIG. 9. In one embodiment, the conductor executes the Al agents in response to user input (e.g., via the designer application) indicating that the AI agents should be executed. For example, as shown in FIG. 4A, the conductor may execute the Al agents in response to the user selecting run button 480. In another embodiment, the conductor executes the Al agents according to a predefined schedule (e.g., everyday at a predefined time). In another embodiment, the conductor executes the Al agents (e.g., in response to user input) and the Al agents continuously run to continuously evaluate the security of the computer system.

As shown in workflow 1600 of FIG. 16, LLM 1 1604 (i.e., the initial Al agent) acts as an SOCC (security operations center commander). The LLM 1 1604 gets its persona via context grounding from role definition files 1608 stored in context grounding database (CG 1) 1606. The role definition files 1608 provides the specialized knowledge, skills, and abilities of the role. As defined in role definition files 1608, the role of LLM 1 1604 is to act an SOCC to evaluate the input alert 1602, determine a strategy for evaluating the computer security issue, determine one or more Al agents (i.e., LLM 2 1614-A, LLM 3 1614-B, ..., LLM n 1614-n) from a pool of Al agents for evaluating the computer security issue, and to continue to orchestrate the workflow. LLM 1 1604 will think and act of its own based on alert 1602 but will also utilize predefined operating procedures 1612 to apply additional framework and direction of SOCC decision. The predefined operating procedures 1612 are stored in context grounding database (CG 2) 1610. While role definition files 1608 and operating procedures 1612 are respectively stored in context grounding database CG1 1606 and context grounding database CG2 1610, it should be understood that role definition files 1608 and operating procedures 1612 may be stored in any number of databases.

Different alerts utilize different roles with specialized knowledge, skills, and abilities to evaluate computer security issues. LLM 1 1604 has pool of Al agents, comprising LLM 2 1614-A, LLM 3 1614-B, . . ., LLM n 1614-n, that get their persona from role definition files 1608. Role definition files 1608 and predefined operating procedures 1612 are provided to the Al agents as context information via one or more prompts for context grounding.

Having a context grounding database CG1 1606 of role definition files 1608 allows consistent actions by different agents at scale. Utilizing file-based resources that exist in context grounding database CG1 1606 allows rapid modification of files at a central source outside direct code that can be utilized at scale. Modification of the centralized role definition files 1608 forces all use of that role to conform to the changes.

In one embodiment, the role definition files 1608 comprise the following components: 1) Title: The name of the role; 2) Description: An overview of the role that allows other agents to understand the context of the role and therefore decide when and how to use the role; 3) Background: Background of the role defining its work experience and history; 4) Tasks: List of specific tasks the role is aware of and effective at, without limits its capacity; 5) Knowledge: List of specific knowledge the role has; 6) Skills: list of specific skills the role has; and 7) Abilities: List of specific abilities the role has.

The following is a list of exemplary Al agents, along with their role, tools they may utilize, tasks they perform, and other Al agents they may utilize, in accordance with one embodiment. Other types of Al agents may also be utilized and the number of Al agents utilized may be increased or decreased based on, e.g., need for the specific alert, intake source, or specific desired workflow.
- SOCC Agent:
   ∘ Role: The commander and orchestrator for evaluating the security issue (e.g., from alerts to security events, to on demand intelligence and threat hunting requests).
   ∘ Tools: Alert History, Alert Processor, Internal Documentation Tool, Messager, Email Message, Ticket creator, Write to Confluence.
   ∘ Tasks: Initialize Agents to triage the event, Ensure agents stay on task, Summarize Analysis and recommend actions, Communicate with internal employees to aid in analysis.
   ∘ Agents Available: Incident (Security Event) Commander, SSA, IAM analyst, STH, Insider Risk Analyst.
- Incident (Security Event) Commander Agent:
   ∘ Role: A specialized Senior Security Engineer that handles the orchestration and management of time sensitive security investigations.
   ∘ Tools: Write to Confluence, Ticket creator, Email Message, Messager, Start Security Event, Alert Update, Alert History, Internal Documentation Tool.
   ∘ Tasks: Event Initiation, Event Scheduling, Event Summarization, Event Communication.
   ∘ Agents Available: STH, TIA, MA, CSFE, NFE.
- SSA (Senior Security Operations Analyst) Agent:
   ∘ Role: General analyst with extensive experience in security operations work. Will begin operating the playbook and working with the SCCC.
   ∘ Tools: Data Lake Execute Query, Enrichments Services, Internal Documentation Tool, Alert Processor, Query Builder, Log Analyzer, Alert History, Alert Investigator, Alert Update, Alert Escalation, Identify Procedure.
   ∘ Tasks: Alert and Event Investigation, Recommendation of support from other agents, Documentation of findings into the alert or event, IoC documentation and analysis.
   ∘ Agents Available: TIA, CTI OSINT Analyst, IAM Analyst, Insider Risk Analyst, Incident (Security Event) Commander.
- NFE (Network Forensics Expert) agent:
   o Role: Specialist in analyzing network traffic data
   o Tools: Query Builder, Log Analyzer, Data Lake Execute Query, Internal Documentation Tool.
   o Agents Available: Senior TIA.
- CSFE (Computing Systems Forensics Expert) agent:
   ∘ Role: Specialist in forensics work and analyzing activity on computing systems (personal computing, virtual machines, cloud systems).
   ∘ Tools: Create Dedicated Forensics Environment, Endpoint Forensics Acquisition, Cloud Forensics Acquisition.
   ∘ Agents Available: Senior TIA.
- IAM (Identity and Access Management) Analyst Agent:
   ∘ Role: Specialist in analyzing identity information, authorization analysis, and access analysis.
   ∘ Tools: Data Lake Execute Query, Internal Documentation Tool, Query Builder, Log Analyze, Enrichments Services.
- MA (Malware Analyst) Agent:
   o Role: Specialist in analyzing malware.
   o Agents Available: MRE.
- Malware Reverse Engineer (MRE) Agent:
   o Role: Specialist in looking at malware and reverse engineering the code
- Senior TIA (Threat Intelligence Analyst) Agent:
   ∘ Role: Specialist in threat intelligence, taking indicators or tactics, techniques, and procedures, to help provide context to events.
   ∘ Tools: Enrichments Services, Internal CTI for indicators, Data Lake Execute Query, Internal CTI reports, Internet query, Intelligence Report Processor, Query Builder, Log Analyzer, Alert CTI Model, Log Analyzer.
- STH (Senior Threat Hunger) Agent:
   ∘ Role: Specialist in threat hunting, taking indicators or tactics, techniques, and procedures, and searching for artifacts or evidence of compromise within the organization.
   ∘ Tools: Data Lake Execute Query, Internal CTI reports, Internet query, Intelligence Report Processor, Query Builder, Log Analyzer, Log Analyzer, Alert History, Write to Confluence, Ticket creator
   ∘ Agents Available: Senior TIA, Senior SSA.
- CTI (Cyber Threat Intelligence) OSINT (Open Source Intelligence) Analyst Agent:
   ∘ Role: A Senior Security Engineer with a strong background in cyber threat Intelligence. Constantly monitors open-source intelligence or news feeds to identify relevant threats to the organization.
   ∘ Tools: Enrichments Services, Internet query, Intelligence Report Processor, Internal Documentation Tool, Alert CTI Model.
   ∘ Agents Available: STH.
- Insider Risk Analyst Agent:
   ∘ Role: A security Analyst who will work with alerts containing PII and other sensitive corporate data.
   ∘ Tools: Log Analyzer, Query Builder, Data Lake Execute Query, Enrichments Services, Internal Documentation Tool.
   ∘ Agents Available: Incident (Security Event) Commander.

The following is a list of exemplary tools an Al agent may be utilized, along with a description and components utilized by the tool. The tools are defined in the role definition files 1608. Other types of tools may also be utilized and the number of tools utilized may be increased or decreased.
- Data Lake Execute Query:
   o Description: A tool that can execute a particular query against a data lake. The purpose of the tools is to bring more context to the alert, in order for an analyst tool or user to understand the chain of events and make the appropriate classification of the event.
   o Components: HTTP requests, Data Lake.
- Enrichments Services:
   o Description: A tool that is able to provide enrichments (more cyber threat targeted context) about a piece of evidence. The tool has a dual component, API based for third party services, an an LLM component that provides a human readable summary of the enrichment and appropriate conclusion of the impact.
   ∘ Components: HTTP requests, LLM, Third Party Services (e.g., CTI providers).
- Internal CTI for Indicators:
   ∘ Description: A tool that has the ability to query internal cyber threat intelligence data stores in order to bring more context to a piece of evidence.
   ∘ Components: HTTP requests, LLM.
- Internal CTI Reports:
   ∘ Description: A tool that has the ability to identify relevant context from a wide variety of cyber threat intelligence reports. It can get relevant content that can assist in the classification of an alert, identifying other relevant threats or leads and suggesting appropriate next steps for this alert.
   ∘ Components: LLM, Context Grounding.
- Internal Documentation Tool:
   ∘ Description: A tool that uses the internal data to provide enrichments and retrieval of relevant context for LLM usage.
   ∘ Components: LLM, Context Grounding.
- Internet Query:
   ∘ Description: A tool that can perform internet searches for particular indicators or pieces of evidence. Its scope is to provide enrichments to an alert based on unique elements to the alert that are not present in CTI feeds.
   ∘ Components: HTTP requests, RPA (web based apps), LLM.
- Intelligence Report Processor:
   ∘ Description: A tool based on LLM and prompt engineering that has the ability to process intelligence and security news reports in order to extract relevant data, indicators, associated vulnerabilities and cross correlation with other internal company data points.
   ∘ Components: LLM.
- Alert Processor:
   ∘ Description: A tool used to process alerts in order to extract the core entities (users, machines, indicators). This uses LLMs in order to identify and classify each piece of entity to its appropriate class.
   ∘ Components: LLM
- Query Builder:
   ∘ Description: A LLM tool capable of constructing appropriate queries used in an investigation. Starting from template/example queries, the query builder tool will use entitles extracted and classified from the alert processor tool in order to generate the appropriate investigation query.
   ∘ Components: LLM, Context Grounding.
- Log Analyzer:
   o Description: Based on particular profiles for system messages (analyst roles), the log analyzer tool will use as an input the original alert and the data provided by the execute query tool (provided query by the query builder tool) in order to identify correlations between a data set and the original alert. As well, it is going to assess if there are security connections, or relevant information that brings more context to the alert.
   ∘ Components: LLM.
- Alert History:
   ∘ Description: The scope of this tool is to use information regarding previously investigated alerts and identify if there are strong correlations with the alert being handled at the moment. It will identify patterns as well as previous resolutions and handled procedures for the alert itself. For this it will use a context grounding mechanism, an index constructed on previously seen alerts.
   ∘ Components: LLM, Context Grounding.
- Alert Investigator:
   ∘ Description: The scope of the tool is to take the output from all enrichments tools (enrichments, queries, context grounding and so on) and to provide a summary of the investigation, a classification of the investigation and a series of follow up elements, if required by the classification.
   ∘ Components: LLM.
- Alert Update:
   ∘ Description: The scope of the tool is to take simple action upon of an alert, based on the outcome from the alert investigator (actions such as, e.g., close alert or assign the alert to a user, change classification, leave analysis summary in comment, etc.).
   ∘ Components: HTTP Requests, LLM.
- Alert Escalation:
   ∘ Description: If an alert is classified as true positive by the alert investigator tool, this tool will identify the on-call human analyst, generate a full summary of the alert, alert status, and investigation, and submit that to the on caller via on-call mechanisms.
   ∘ Components: HTTP Requests, LLM.
- Alert CTI Model:
   ∘ Description: The scope of this tool is to extract relevant CTI information from **the alert.** For this it will use a context grounding approach, with relevant CTI information in order to do the appropriate mapping.
   ∘ Components: LLM, Context Grounding.
- Identify Procedure:
   ∘ Description: This tool will use a context grounding index based on all the procedures associated with the internal security operation team. When prompted with an alert, the tool will return with the content of the associated procedure for the alert in question.
   ∘ Components: LLM, Context Grounding.
- Cloud Forensics Acquisition:
   ∘ Description: A tool that given a particular identifier of a compromised cloud computing platform, performs tasks such as, e.g., 1) snapshot of computing unit disk and 2) memory dump of the computing unit RAM (random access memory) allocation.
   ∘ Components: Cloud Computing Platform APIs.
- Endpoint Forensics Acquisition:
   ∘ Description: A tool that given a particular identifier of a compromised endpoint, performs tasks such as, e.g., 1) performs memory dump of the computing unit, 2) extracts the memory of the computing unit, 3) extracts a forensics (log) acquisition function, and 4) shares artefacts via cloud services with the response team (upload to storage account).
   ∘ Components: Endpoint APIs.
- Created Dedicated Forensics Environment
   ∘ Description: Create a dedicated forensics environment for each security incident being handled.
   ∘ Components: Cloud Computing Platform API.
- Start Security Event:
   ∘ Description: A tool capable of starting the incident response/security event management process that performs tasks such as, e.g., 1) extract information from the escalated alert, 2) creates a dedicated security event confluence page, 3) creates a share dedicated space, 4) creates a ticket for action management, 5) creates a messenger channel for collaboration, 6) keeps an updated timeline in the created confluence page.
   ∘ Components: Messenger API, Share Space API.
- Messenger:
   ∘ Description: A tool capable of sending custom messages to users or channels (where the bot is a part of).
   ∘ Components: Messenger API.
- Email Message:
   ∘ Description: A tool capable of sending emails to people or groups.
   ∘ Components: Email API.
- Ticket Creator:
   ∘ Description: A tool capable of creating custom tickets for different projects and issues.
   ∘ Components: Ticket API.
- Write to Confluence:
   ∘ Description: A tool capable of writing a new page to a collaboration tool or to update an existing one.
   ∘ Components: Collaboration Tool API.

In one embodiment, the strategy for evaluating the computer security issue comprises a threat management evaluation for classifying the alert by one of the one or more additional AI agents. The additional Al agent that will orchestrate the threat management evaluation is the SSA agent. The scope of the SSA agent is to gather all possible evidence around the alert and alert elements and to make a proper classification of the alert by correlating the evidence with the alert details. The SSA agent identifies computer security issues that do not possess a threat but could take up to 80% of a user's time.

In one embodiment, the strategy for evaluating the computer security issue comprises security event management by one of the one or more additional Al agents. Security event management may be triggered by, for example, based on the classification of the alert by the SSA agent during the threat management evaluation or by may be manually triggered by a user. The additional Al agent that will orchestrate the security event management is the incident (security event) commander agent, which will 1) handle incident management intake (by creating documentation and the tracking and orchestrating infrastructure for the incident) for mitigating the computer security issue and 2) handle artifact acquisition and forensics processes.

In one embodiment, the strategy for evaluating the computer security issue comprises the identification of emerging computer security issues by one of the one or more additional Al agents. The additional AI agents that will orchestrate the identification of emerging threats is the STH agent, the TIA agent, and the CTI OSINT analyst agent. During the identification of emerging threats workflow, the additional Al agents extract relevant information from news articles and other data relating to emerging threats and identifies computer security issues related to the emerging threats.

At step 1506 of FIG. 15, the computer security issue is evaluated according to the strategy using the one or more additional Al agents.

In one embodiment, the strategy for evaluating the computer security issue comprises a threat management evaluation for classifying the alert. In this embodiment, the one or more additional AI agents comprises the SSA agent.

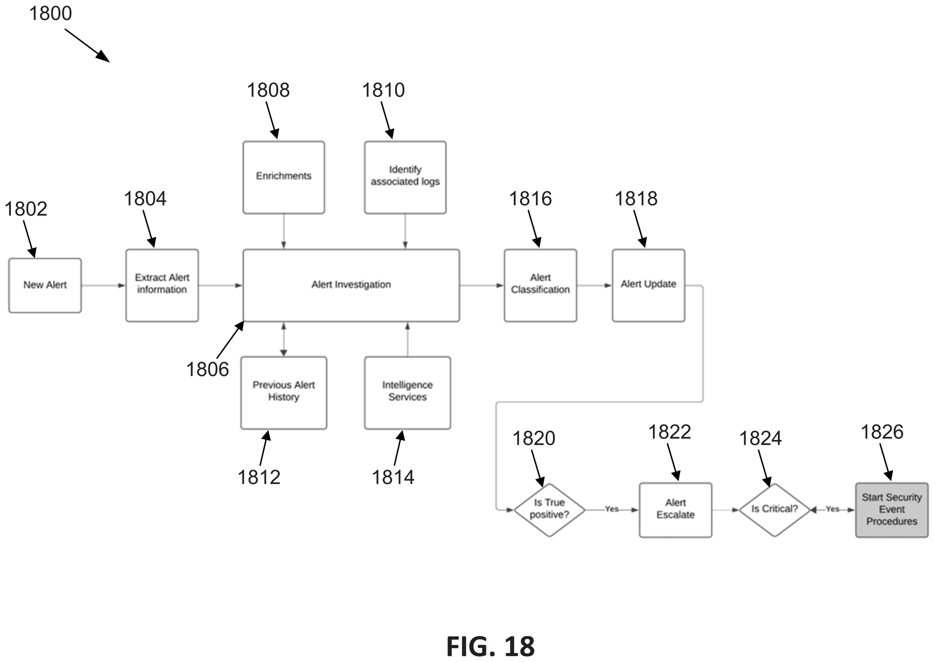

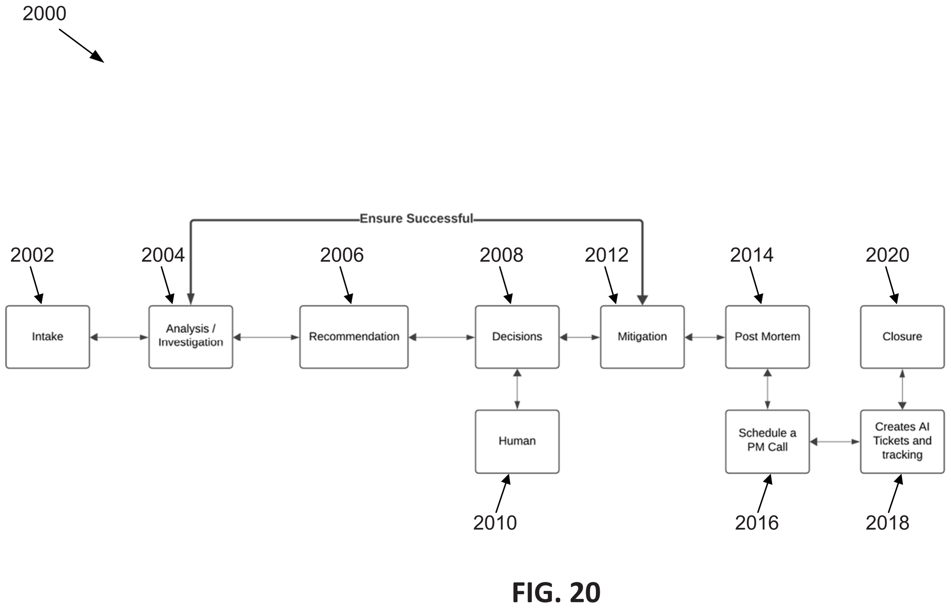

FIG. 18 shows a workflow 1800 for classifying an alert, in accordance with one or more embodiments. The steps and sub-steps of workflow 1800 is performed by the SSA agent. In workflow 1800, an alert investigation 1806 is performed based on extracted alert information 1804, enrichments 1808, identified associated logs 1810, previous alert history 1812, and intelligence service 1814. The extracted alert information 1804 is extracted from a new alert 1802. In one example, the alert is the alert received at step 1506 of FIG. 15. Alert classification 1816 is determined based on the alert investigation 1806 to classify the alert and the alert is updated 1818. For example, a status of the alert may be classified as being a false positive, true positive, inconclusive, or suspicious. In another embodiment, an urgency of the alert may be classified as, e.g., low, medium, high, and critical. Alert classification 1816 may also output an investigation summary. If the updated alert is a true positive or suspicious, the alert is escalated 1822. For example, for medium, high, and critical level alerts, the updated alert may be escalated to a user for manual review. If the updated alert is critical 1824, a security event management procedure 1826 is started by the incident (security event) commander agent. The security event management procedure 1826 may be performed according to FIG. 20.

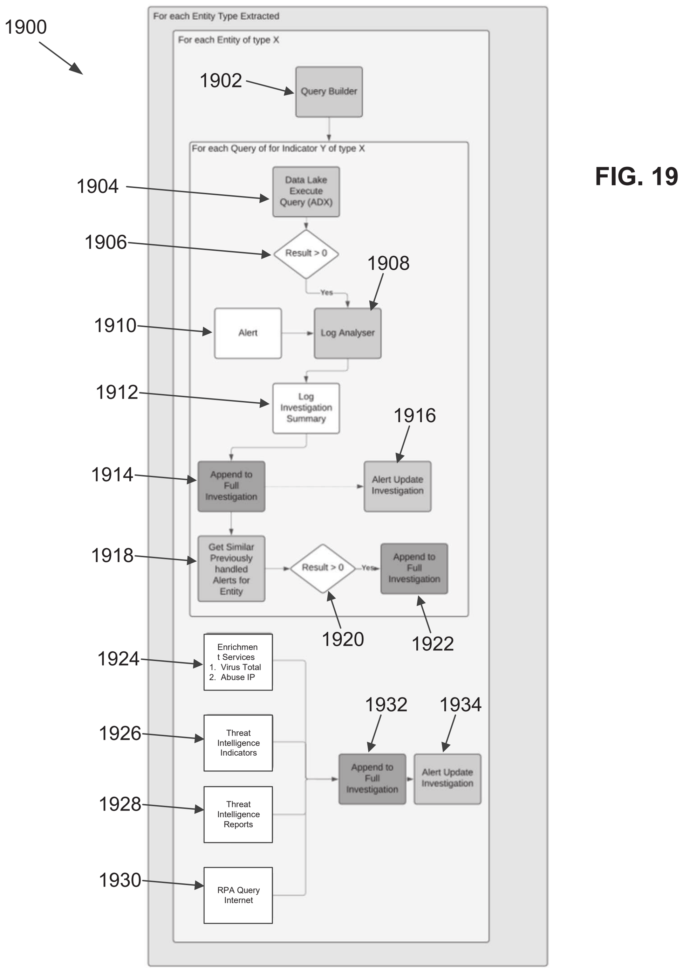

FIG. 19 shows a workflow 1900 for investigating an alert, in accordance with one or more embodiments. Workflow 1900 may be performed at alert investigation 1806 of FIG. 18. For each entity type extracted from the alert and for each entity of a certain type X, a query builder 1902 builds one or more queries. For each query of indicator Y of type X, the query is executed 1904 and, if the results are greater than 0 at block 1906, log analyzer 1908 analyzes the log of the execution and the alert 1910 to generate a log investigation summary 1912. Log investigation summary 1912 is appended to the full investigation at block 1914, the investigation is updated 1916, and similar previously handled alerts for that entity is retrieved at block 1918. If the results are greater than zero at block 1920, the previously handled alerts are appended to the full investigation at block 1922. Additionally, enrichment services 1924, threat intelligence indicators 1926, threat intelligence reports 1928, and RPA internet queries 1930 are appended to the full investigation at block 1932 and the investigation is updated 1934.

Returning back to step 1506 of FIG. 15, in one embodiment, the strategy for evaluating the computer security issue comprises security event management. Security event management may be triggered by, for example, based on the classification of the alert by the SSA agent determined according to FIG. 18 or by may be manually triggered by a user. In this embodiment, the one or more additional Al agents comprises the incident (security event) commander agent.

FIG. 20 shows a workflow 2000 for security event management, in accordance with one or more embodiments. The steps and sub-steps of workflow 1800 is performed by the incident (security event) commander agent. The incident (security event) commander agent may optionally call other one or more additional Al agents, such as, e.g., NFE agent, CSFE agent, MA agent, MRE agent, and/or the STH agent. The agents may utilize tools, such as, e.g., create dedicated forensics environment, cloud forensics acquisition, and endpoint forensics acquisition. Intake 2002 receives an escalated alert and an analysis/investigation 2004 is performed to generate a recommendation 2006 of one or more actions for mitigating the security issue. At block 2008, it is decided whether to proceed with the one or more actions, which may involve input from a human 2010. At block 212, the one or more actions are performed to mitigate the computer security issue. Workflow 2000 may return to the analysis/investigation 2004 to ensure the mitigation of the computer security issue is successful. A postmortem 2014 is performed to analyze results of the mitigation of the computer security issue and a call may be scheduled at block 2016 and a ticket and tracking is created at block 2018. The workflow closes at block 2020.

Returning back to step 1506 of FIG. 15, in one embodiment, the strategy for evaluating the computer security issue comprises the identification of emerging threats by one of the one or more additional AI agents. In this embodiment, the one or more additional Al agents may include the STH agent, the TIA agent, and the CTI OSINT analyst agent. The CTI OSINT analyst agent may run at predefined (e.g., 1 hour) intervals and may use the following tools: alert CTI model, internet query, internal documentation tool, intelligence report process, ticket creator. The TIA agent can be called by the CTI OSINT analyst agent, the STH agent, or may be manually called by a user. The TIA agent may use the following tools: alert CTI model, internet query, enrichments services, internal CTI for indicators, internal CTI reports, data lake execute query, query builder, and log analyzer. The STH agent may be called by the CTI OSINT analyst agent or may be manually called by a user. The purpose of the STH agent is to acquire all evidence about a topic and to generate a comprehensive report about a statement or an issue. The STH agent may use the following tools: engage TIA agent, data lake execute query, query builder, log analyzer, write to confluence, alert processor, and alert CTI model.

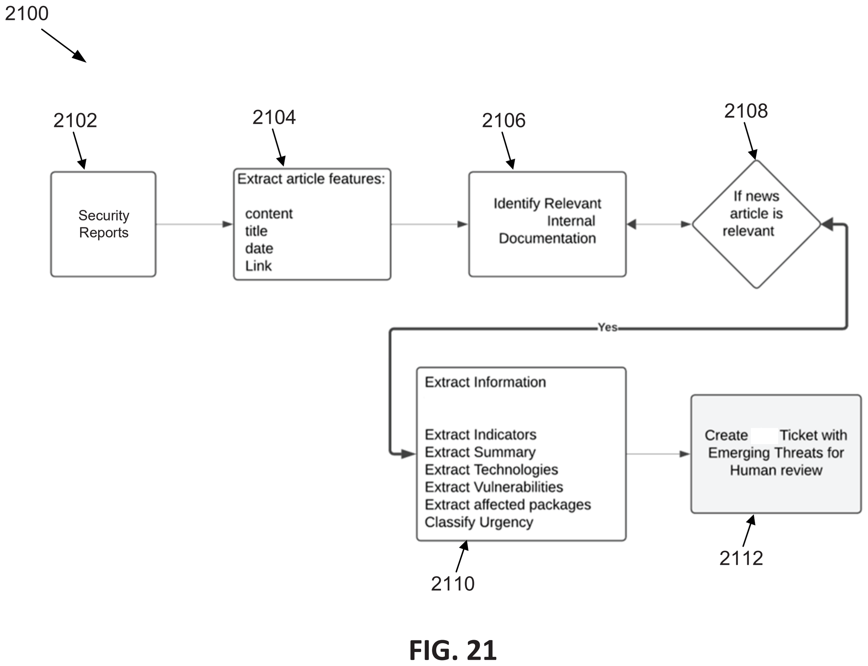

FIG. 21 shows a workflow 2100 for detecting emerging computer security issues, in accordance with one or more embodiments. The steps and sub-steps of workflow 2100 is performed by the CTI OSINT agent. In workflow 2100, new security reports are received at block 2102. The security reports may comprise, for example, news articles, social media posts, emails or messages, alerts, audio/video recordings, or any other data relating to computer security. At block 2104, features are extracted from the security related news, such as, e.g., content, title, date, and link. At block 2106, relevant internal documentation is identified and, if the news article is relevant at decision block 2108, information of a computer security issue is extracted from the news articles, such as, e.g., indicators, summary, technologies, vulnerabilities, affected packages, etc. and the urgency is classified. A ticket with the emerging computer security issues is created for human review at block 2112.

In one embodiment, evaluating the security of the computer system comprises assessing the exploitability of a vulnerability of an executable file. Often, a vulnerability exists in a file that is part of a package installed within a virtual machine. However, the application code may not have an executable path to invoke the file. The Al agent evaluates the computer system to determine whether the vulnerable file has an executable path and is able to be called. The one or more additional AI agents receive as input the alert along with computer security data (e.g., source code of the file), analyzes the source code to understand the stack trace of the code flow and determine whether the file has an executable path, and generate as output the results of the analysis of the source code.

At step 1508 of FIG. 15, results of the evaluation of the computer security issue are output. For example, the results of the evaluation of the computer security issue can be output by displaying the results on a display device of a computer system (e.g., display 1125 of computing system 1100 of FIG. 11), storing the results on a memory or storage of a computer system (e.g., memory 1115 of computing system 1100 of FIG. 11), or by transmitting the results to a remote computer system (e.g., computing system 1100 via communication device 1120).

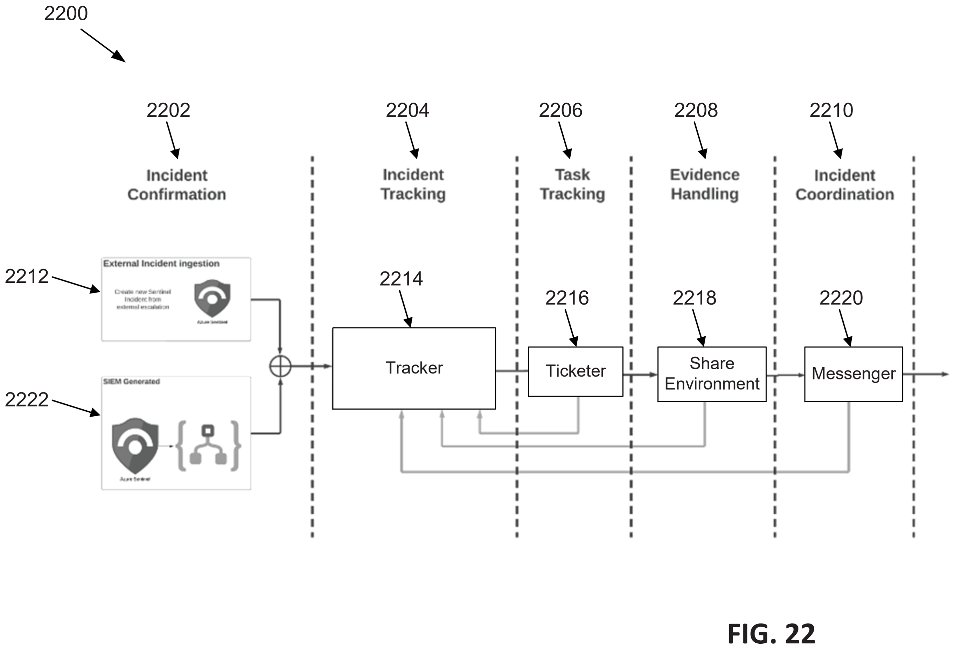

FIG. 22 shows a workflow 2200 for security event management, in accordance with one or more embodiments. Workflow 2200 shows a high-level workflow performed by incident (security event) commander agent using various tools. In workflow 2200, an incident confirmation step 2202 is performed by ingesting external incident reports 2212 and the alert 2222, incident tracking 2204 is performed by tracker tool 2214, task tracking 2206 is performed by ticketer tool 2216, evidence handling 2208 is performed by share environment tool 2218, and incident coordination 2210 is performed by messenger tool 2220.

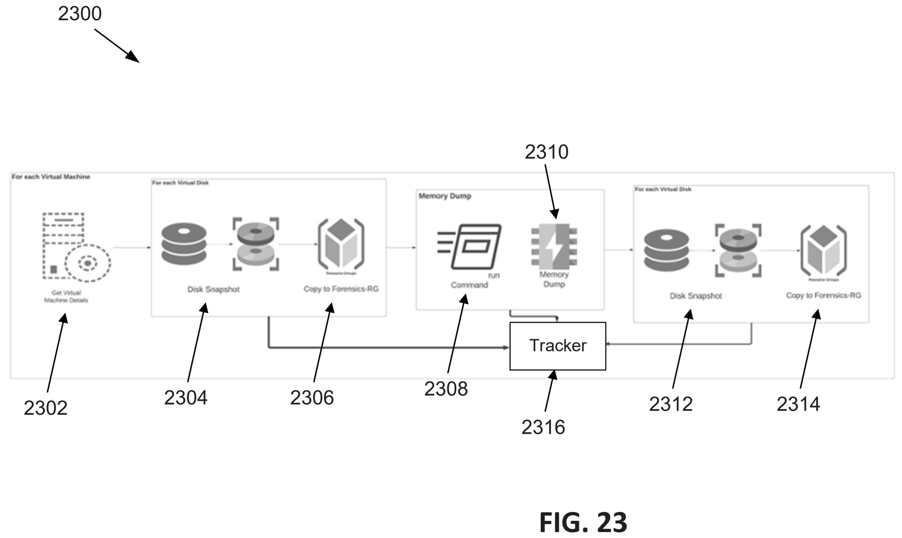

FIG. 23 shows a workflow 2300 for forensics acquisition, in accordance with one or more embodiments. Workflow 2300 may be performed by one or more tools, such as, e.g., cloud forensics acquisition or endpoint forensics acquisition. In workflow 2300, for each virtual machine, virtual machine details are obtained at step 2303. For each virtual disk of the virtual machine, a disk snapshot 2304 and 2312 is obtained and copied to a forensics database 2306 and 2314. A command is run at step 2308 for performing a memory dump and the memory dump is performed at step 2310. The forensics acquisition is coordinated by tracker 2316.

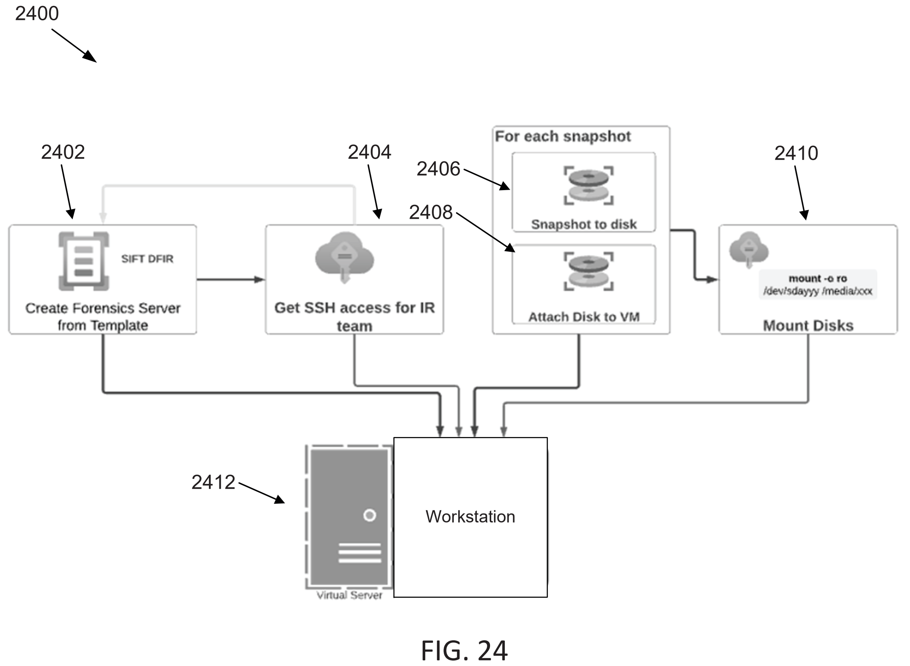

FIG. 24 shows workflow 2400 for creating a dedicated forensics environment, in accordance with one or more embodiments. Workflow 2400 may be performed by one or more tools, such as, e.g., crate dedicated forensics environment tool. A forensics server is created from a template at step 2402. The forensics server is created in virtual server 2412 of a workstation. SSH (secure shell) access for virtual server 2412 is obtained at step 2404. For each snapshot, the snapshot is saved to disk at step 2406 and the disk is attached to the virtual machine 2408 in virtual server 2412. The disks are mounted in virtual server 2412 at step 2410.

The steps disclosed herein, including the steps and sub-steps of FIGS. 14-24, may be performed by a computer program, encoding instructions for the processor(s) to perform at least part of the steps disclosed herein, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 1110 of computing system 1100 of FIG. 11) to implement all or part of the steps disclosed herein, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A computer-implemented method comprising:
receiving an alert for a computer security issue of a computer system;
determining, by an initial AI (artificial intelligence) agent, 1) a strategy for evaluating the computer security issue and 2) one or more additional Al agents from a pool of AI agents for evaluating the computer security issue;
evaluating the computer security issue according to the strategy using the one or more additional AI agents; and
outputting results of the evaluation of the computer security issue.

2. The computer-implemented method of claim 1, wherein the initial Al agent and the one or more additional Al agents have roles defined by role definition files provided as context information via one or more prompts.

3. The computer-implemented method of claim 2, wherein each of the role definition files comprises a title, background, tasks, knowledge, skills, and abilities for an Al agent.

4. The computer-implemented method of claim 1, wherein determining, by an initial Al (artificial intelligence) agent, 1) a strategy for evaluating the computer security issue and 2) one or more additional Al agents from a pool of Al agents for evaluating the computer security issue comprises:
determining, by the initial Al agent based on procedures provided as context information via one or more prompts, 1) the strategy and 2) the one or more additional AI agents.

5. The computer-implemented method of claim 1, wherein the strategy for evaluating the computer security issue comprises:
classifying the alert by at least one of the one or more additional Al agents.

6. The computer-implemented method of claim 1, wherein the strategy for evaluating the computer security issue comprises:
mitigating the computer security issue by one or more of the one or more additional Al agents.

7. The computer-implemented method of claim 6, wherein evaluating the computer security issue according to the strategy using the one or more additional Al agents comprises:
automatically performing the mitigating of the computer security issue by the one or more of the one or more additional AI agents.

8. The computer-implemented method of claim 1, wherein the strategy for evaluating the computer security issue comprises:
identifying emerging computer security issues based on security reports.

9. The computer-implemented method of claim 1, wherein receiving an alert for a computer security issue of a computer system comprises:
receiving the alert from a security monitoring/alert system.

10. A system comprising:
at least one processor; and
a memory storing computer instructions, which when executed by the at least one processor, cause the system to perform operations comprising:
receiving an alert for a computer security issue of a computer system;
determining, by an initial AI (artificial intelligence) agent, 1) a strategy for evaluating the computer security issue and 2) one or more additional Al agents from a pool of AI agents for evaluating the computer security issue;
evaluating the computer security issue according to the strategy using the one or more additional AI agents; and
outputting results of the evaluation of the computer security issue.

11. The system of claim 10, wherein the initial Al agent and the one or more additional Al agents have roles defined by role definition files provided as context information via one or more prompts.

12. The system of claim 11, wherein each of the role definition files comprises a title, background, tasks, knowledge, skills, and abilities for an Al agent.

13. The system of claim 10, wherein determining, by an initial Al (artificial intelligence) agent, 1) a strategy for evaluating the computer security issue and 2) one or more additional AI agents from a pool of AI agents for evaluating the computer security issue comprises:
determining, by the initial Al agent based on procedures provided as context information via one or more prompts, 1) the strategy and 2) the one or more additional AI agents.

14. The system of claim 10, wherein the strategy for evaluating the computer security issue comprises:
classifying the alert by at least one of the one or more additional Al agents.

15. The computer-implemented method of claim 10, wherein the strategy for evaluating the computer security issue comprises:
mitigating the computer security issue by one or more of the one or more additional Al agents, wherein,
automatically performing the mitigating of the computer security issue by the one or more of the one or more additional AI agents.
